**Europäisches Patentamt**

**European Patent Office**

**Office européen des brevets**

(19)

(11) **EP 1 386 863 A1**

(12) # EUROPEAN PATENT APPLICATION

(43) Date of publication:
**04.02.2004 Bulletin 2004/06**

(51) Int Cl.7: **B65G 57/00**, B65D 71/00

(21) Application number: **02017220.1**

(22) Date of filing: **31.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **3M Innovative Properties Company St. Paul, Minnesota 55133-3427 (US)** | (72) Inventor: **Kreckel, Karl Werner**<br>**42781 Haan (DE)**<br><br>(74) Representative: **Wilhelm, Stefan M.**<br>**Office of Intellectual Property Counsel,**<br>**c/o 3M Deutschland GmbH,**<br>**Carl-Schurz-Strasse 1**<br>**41453 Neuss (DE)** |

(54) **Method for stabilizing stacks of goods on supporting substrates**

(57)    The invention refers to a semi-continuous method for stacking layers of goods on a supporting substrate comprising the steps of: a) providing a continuous or discontinuous sheet material 2 having first and second major surfaces, b) optionally applying an exposed layer of pressure-sensitive adhesive 3 to at least partially cover at least one of said major surfaces of said sheet material 2, and optionally cutting said continuous sheet material 2, to provide an interlayer 1, c) providing a first layer of goods 30 on a supporting substrate, said layer of goods having an upper and lower surface, d) applying said interlayer 1 to the upper surface of the first layer of goods and e) stacking a second layer of goods 30' on top of the interlayer 1, with the proviso that if no exposed layer of pressure-sensitive adhesive 3 is provided in step b), the continuous or discontinuous sheet material 2 comprises an exposed layer of pressure-sensitive adhesive 3 at least partially covering one major surface.

Fig.1c

**EP 1 386 863 A1**

**Description**

Field of the Invention

The present invention relates to a semi-continuous method for stacking layers of goods on a supporting substrate such as a pallet and inserting one or more interlayers between subsequent layers of goods, thereby obtaining stable stacks of goods.

The invention furthermore refers to a device for carrying out the method of the invention as well as to interlayers prepared using the method and device.

Background of the invention

It is common in industry that goods are palletized, stacked or otherwise assembled for storage, internal transportation at the production site and for external transportation and shipment. Various methods have been disclosed in the prior art for sufficiently stabilizing such stacks of goods throughout the entire transportation and shipment process.

EP 1 184 164 describes an interlayer sheet for use in increasing the stability of a stack of goods, where the interlayer sheet comprises two or more layers and a first and second exposed major surface, at least the first major surface of the interlayer sheet being formed by a first polymer layer wherein the polymer has a Vicat softening point of less than 65° C.

EP 283 405 describes a sheet material, usable in particular as an intercalated element between two surfaces of products to be prevented from slipping in relation to one another, said material being provided on both sides with a coat of an adhesive substance applied, on each side of the sheet, in the form of areas covering less than 50% of the total surface of the sheet, whereby the adhesive areas on one side are offset in relation to the adhesive areas on the other side in such a way that, when the two sides are placed in contact with one another, either said adhesive areas are able to interpenetrate without touching one another or, if two adhesive areas are in contact, said contact is virtually punctiform, so that the two coats may be separated from one another very easily.

The prior art methods of palletizing, assembling or stacking goods do not always result in stacks of goods that are sufficiently stable for shipment and storage purposes. The known method of palletizing, disclosed in European Patent EP 283 405 using interlayers bearing pressure-sensitive adhesives, comprises processes where the interlayer or interlayer precursor is manufactured and first superimposed upon itself in the form of a roll or a stack before the interlayer is inserted between layers of goods on a pallet. This intermediate step places severe restrictions on the adhesives and sheet materials that can be used and, in particular, on the location of adhesive areas on the major surfaces of the interlayer.

It is the object of the invention to provide an improved method of palletizing, assembling or stacking of goods using interlayers between subsequent layers of goods which does not exhibit the shortcomings of the state-of-the-art methods or exhibits such disadvantages to only a lower degree. Other objects of the present invention are apparent to the person skilled in the art from the following detailed description of the invention.

Summary of the invention

The present invention refers to a semi-continuous process for stacking layers of goods on a supporting substrate comprising the steps of: a) providing a continuous or discontinuous sheet material having first and second major surfaces, b) optionally applying an exposed layer of pressure-sensitive adhesive to at least partially cover at least one of said major surfaces of said sheet material, and optionally cutting said continuous sheet material, to provide an interlayer, c) providing a first layer of goods on a supporting substrate, said layer of goods having an upper and lower surface, d) applying said interlayer to the upper surface of the first layer of goods and e) stacking a second layer of goods on top of the interlayer with the proviso that if no exposed layer of pressure-sensitive adhesive is provided in step b), the continuous or discontinuous sheet material comprises an exposed layer of pressure-sensitive adhesive at least partially covering one major surface.

The invention further refers to a packaging device suitable for the semi-continuous preparation of stabilized stacks of goods on a supporting substrate comprising: a) a supply of continuous or discontinuous sheet material having first and second major surfaces, b) means for applying an exposed layer of pressure-sensitive adhesive to at least partially cover at least one of said major surfaces of the sheet material, and optional means for cutting said continuous sheet material, said means allowing to form an interlayer, c) means for applying said interlayer to the upper surface of a layer of goods on a supporting substrate and d) optional means for automatically stacking a second layer of goods on top of the interlayer.

The invention furthermore refers to an interlayer for stabilizing layers of goods on a supporting substrate, comprising a sheet material having a first and second major surfaces and an exposed layer of pressure-sensitive adhesive at least partially covering both of the major surfaces of the sheet material in a configuration such that if a first interlayer is superimposed on a second interlayer, the exposed layer of pressure-sensitive on the first major surface of the first interlayer at least partly overlaps with an exposed layer of pressure-sensitive on the second major surface of the second interlayer.

The invention furthermore refers to an interlayer for stabilizing layers of goods on a supporting substrate, comprising a sheet material having a first and second major surfaces and exposed layers of pressure-sensitive adhesive at least partially covering both of the major surfaces of the sheet material in a staggered configuration, whereby at least one major surface of the sheet material bears an exposed release material directly opposing the exposed layers of pressure-sensitive adhesive on the other major surface of the sheet material.

The invention furthermore refers to an interlayer for stabilizing layers of goods on a supporting substrate, comprising a sheet material having a first and second major surface and an exposed layer of pressure-sensitive adhesive at least partially covering the first major surface of the sheet material, where the second major surface of the sheet material comprises an exposed layer of polymer having a Vicat softening point of less than 65° C as measured according to EN ISO 306:1994(E) at least partially covering the second major surface.

The invention furthermore refers to an interlayer comprising a sheet material having a first and second major surface, comprising an exposed layer of pressure-sensitive adhesive at least partially covering the first major surface and an exposed polymeric layer having a coefficient of friction against LDPE of at least 0.4 as measured by DIN 53 375B at least partially covering the second major surface.

The invention furthermore refers to an interlayer comprising a sheet material having a first and second major surface, where at least one major surface is at least partially covered by an exposed layer of pressure-sensitive adhesive, and

where the sheet material comprises paper and where the pressure-sensitive adhesive layer is selected such that, if a first interlayer is superimposed upon a second interlayer, separation of the interlayers would result in damage to the sheet material or deposit of adhesive residue on the sheet material.

The invention furthermore refers to a stack of interlayers, at least comprising a first interlayer superimposed upon a second interlayer, where each of the interlayers comprises a sheet material having a first and second major surface, and where the major surfaces of each interlayer each bear an exposed layer of pressure-sensitive adhesive , in a configuration such that the exposed layer of the pressure-sensitive adhesive on the upper major surface of the second interlayer at least partly overlaps with the exposed layer of the pressure-sensitive adhesive on the lower major surface of the first interlayer, and where the exposed layers of pressures-sensitive adhesive each comprise tacky elastomeric microspheres.

The invention furthermore refers to the use of the interlayers according to the present invention for stabilizing layers of goods stacked on a supporting substrate.

Brief description of the figures

*Figure* 1a and 1 b are schematic views of a portion of a preferred embodiment of the device 10 of the invention where the sheet material 2 is provided as discontinuous pre-cut sheets (Figure 1 a) or as a continuous roll (Fig. 1 b), respectively.

*Figure* 1c is a schematic diagram of a preferred embodiment of a complete packaging device 10.

Figure 2a-c are schematic diagrams of preferred configurations of exposed layers of pressure-sensitive adhesive 3 on sheet materials 2.

Figure 3a-c schematically show preferred configurations of interlayers and layers of goods stacked on supporting surfaces such as pallets.

Figure 4a - 4b, 5a - 5b, 6a - 6b, 7a - 7b and 8a - 8b schematically show cross-sectional views of preferred embodiments of interlayers 1 according to the present invention and of stacks of such interlayers, respectively.

Detailed description of the invention

The term "semi-continuous process" as used above and below, as opposed to a discontinuous process, is defined herein as one where a continuous or discontinuous sheet material 2 having a first and a second major surface at least one of which being at least partially covered with a pressure-sensitive adhesive 3 is optionally cut to form interlayers 1, and where such interlayers 1 are employed directly in palletizing or stacking operations without an intermediate step of rolling up, stacking and for storing such interlayers 1. The pressure-sensitive adhesive 3 may already be pre-applied to the sheet material 2, and/or it is applied semi-continuously to the sheet material 2 during the process of the invention. A cutting step is required if the sheet material 2 is continuous or if it is discontinuous whereby the format of such discontinuous sheet material is different from the desired format of the interlayer 1.

The term "high coefficient-of-friction surface", as used above and below, is defined as a surface having a coefficient-of-friction of greater than 0.4 against low density polypropylene (LDPE) as measured by DIN 53 375-B.

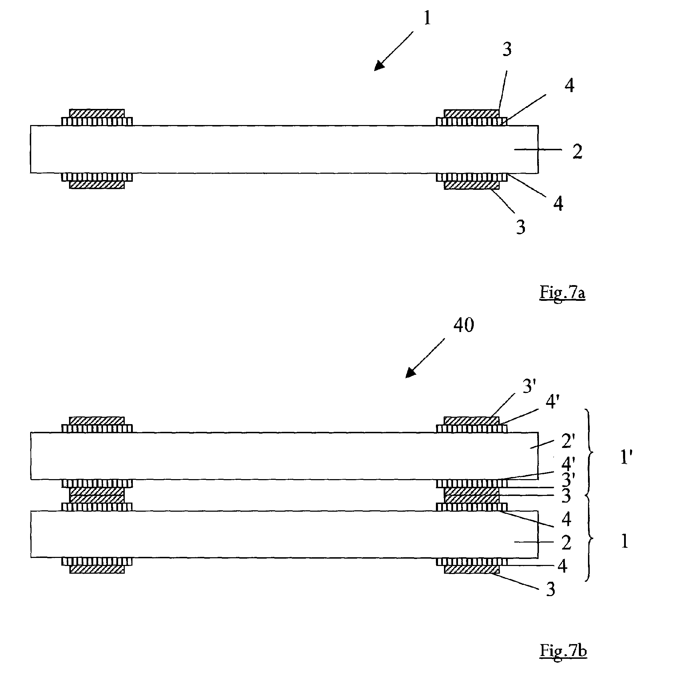

The term "directly opposing", as used above and below, describes an arrangement of two exposed layers of pressure-sensitive adhesive 3 on the two opposite major surfaces of a sheet material 2, where the exposed layers of pressure-sensitive adhesive 3 are directly and completely opposing one another, as shown schematically, for example, in Figure 7a.

The term "overlapping", as used above and below, describes an arrangement of two exposed layers of pressure-sensitive adhesive 3 on the two opposite major surfaces of a sheet material 2, where the exposed layers of pressure-sensitive adhesive are only partially opposing each other

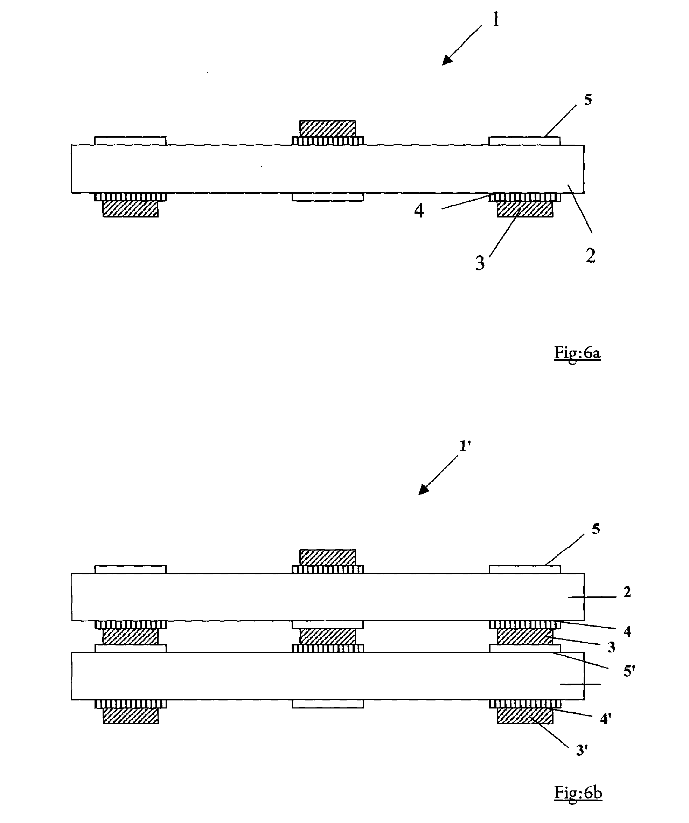

The term "staggered", as used above and below, describes an arrangement of two exposed layers of pressure-sensitive adhesive 3 on the two opposite major surfaces of a sheet material 2, where such exposed layers of pressure-sensitive adhesive 3 are placed in an alternating fashion with respect to each other so that no adhesive layer lies directly opposite another adhesive layer on the opposite major surface of the sheet material, as shown schematically, for example, in Figure 6.

The present invention describes a semi-continuous process for stacking layers of goods on a supporting substrate comprising the steps of a) providing a continuous or discontinuous sheet material having first and second major surfaces, b) optionally applying an exposed layer of pressure-sensitive adhesive to at least partially cover at least one of said major surfaces of said sheet material, and optionally cutting said continuous sheet material, to provide an interlayer, c) providing a first layer of goods on a supporting substrate, said layer of goods having an upper and lower surface, d) applying said interlayer to the upper surface of the first layer of goods and e) stacking a second layer of goods on top of the interlayer, with the proviso that if no exposed layer of pressure-sensitive adhesive is provided in step b), the continuous or discontinuous sheet material 2 comprises an exposed layer of pressure-sensitive adhesive 3 at least partially covering one major surface.

Interlayers 1 which are useful in the method of the present invention comprise a sheet material 2. The sheet material 2 comprises a first major surface and a second major surface. The thickness of the sheet material 2 is preferably between 10 μm and 7,000 μm (7 mm) and more preferably between 20 μm and 3,000 μm. Paper or cardboard sheet material 2 preferably has a thickness of between 50 μm and 3,000 μm (3 mm), while polymeric film sheet material 3 preferably has a thickness of between 20 μm and 200 μm.

If the sheet material is a multilayer construction comprising two or more layers, the shape and/or extension area of the first and second major surfaces, respectively, may be different from each other. It is, however, preferred that the shape and extension of the first and second major surfaces of the interlayer 1 are essentially the same. In case the interlayers 1 are used in a stack of goods, the extension of the interlayer 1 preferably does not substantially exceed the extension of the surface of the layer of goods 30 to be stabilized. The ratio of the area of the first and second major surfaces of the sheet material 2 to the area of the layer of goods 30 preferably is between 0.1 and 1.1 and more preferably between 0.4 and 1.0

The sheet material 2 of the interlayer 1 can be selected from the group comprising paper, lightweight cardboards, polymeric films, polymer-coated papers, woven webs and non-woven webs. Preferably, the sheet material 2 has sufficient internal strength to be handled by conventional web-handling equipment as well as adhesive or adhesive tape application equipment. Preferably, the sheet material 2 is selected from the group consisting of paper or polymeric film.

Preferred polymeric films are polyolefin-based films such as polyethylene (PE), polypropylene (PP) or copolymers thereof. One especially preferred polymeric film sheet material 2 useful in the present invention is biaxially-oriented polypropylene (BOPP). A second especially preferred polymeric film sheet material 2 is low density polyethylene (LDPE) film. Preferably, the polymeric film sheet material 2 is selected so as to have a coefficient-of-friction against LDPE of at least 0.4 (as measured according to DIN 53 375-B).

A preferred multilayer sheet material 2 is one bearing a layer of high coefficient-of-friction polymer 7 on one major surface of the sheet material 2. A high coefficient-of-friction surface is defined as one having a coefficient-of-friction of greater than 0.4 against LDPE as measured by DIN 53 375-B. Such high coefficient-of-friction polymer layers may be applied to the sheet material 2 using conventional coating techniques such as hot-melt coating, or coating from dispersion or solution, followed by drying, but also may be provided by coextrusion with a polymeric film sheet material 2. Preferably, the high coefficient-of-friction polymer layer 7 is provided by co-extrusion with the sheet material 2. A preferred method of coextrusion and a preferred two-layer film are disclosed in European Patent Application EP 1,184,164. The two-layer film preferably comprises a base layer of polypropylene bearing a thin layer of linear low density polyethylene (LLDPE) on one surface. The thin continuous layer of linear low density polyethylene (LLDPE) provides a high-coefficient-of-friction surface 7 on one surface of the resulting interlayer 1. The polymeric layer having a high coefficient-of-friction (particularly against smooth polymeric films) reduces the ability of goods on a surface such as a pallet to move in the horizontal plane. Though a high coefficient-of-friction surface does not suppress movement of goods in the vertical direction (as do exposed layers of pressure-sensitive adhesives 3), such a surface can contribute substantially to overall pallet stability.

The sheet material 2 suitable for use in the method of the present invention may also be pre-treated. A first preferred pre-treatment for the sheet material 2 is one that improves adhesion of the pressure-sensitive adhesive 3 to the sheet material 2. The preferred pre-treatments are performed prior to application of pressure-sensitive adhesive layers or tapes, in order to promote adhesion between the sheet material 2 and any pressure-sensitive adhesive or pressure-sensitive adhesive tape that may be applied to them in the method of the present invention. The pre-treatment of the sheet material 2 can include application of thin layers of chemical primers or, in the case of polymeric films, may also include flame treatment and plasma treatments, as well as corona treatment in air or in special environments such as nitrogen. Such a pre-treatment may be performed on one or both major surfaces of the sheet material 2 as required.

A second preferred pre-treatment for the sheet material 2 is the application of an exposed layer of release material 5 to at least partially cover one or both major surfaces of the sheet material 2. Release materials may comprise any of those known in the adhesive tape art including, for example, silicones, polyurethanes and polyacrylates.

A third preferred pre-treatment for the sheet material 2 is printing or application of visible indicia such as company logos, identifying marks or graphic designs, to one or both major surfaces of the sheet material 2. Printing may include information related to the goods or directions for use of the interlayer 1.

Interlayers 1 obtainable by the method of the present invention comprise a sheet material 2 having a first and a second major surface, where at least one of the major surfaces is at least partially covered with an exposed layer of pressure-sensitive adhesive 3. The pressure-sensitive adhesives (PSAs) employed in the method of the present invention may be selected from any of those known in the art which include, but are not limited to, acrylate-based PSAs, PSAs comprising natural or synthetic rubbers in combination with natural or synthetic tackifiying resin, polyether-based PSAs, silicone-based PSAs, polyurethane-based PSAs, ethylene-vinyl acetate copolymer-based PSAs and poly-alpha-olefin PSAs.

Several criteria are important for selecting the pressure-sensitive adhesive(s) to be employed in the present invention. Regardless of the method by which the exposed layer of PSA 3 is generated on the major surface or surfaces, respectively of the interlayer 1 and regardless of the chemical nature of the PSA itself, two requirements must be fulfilled:

- The strength of the bond between the pressure-sensitive adhesive 3 and the sheet material 2 must be greater than the strength of the bond between the pressure-sensitive adhesive and the surface of the goods to be stabilized. This insures that any layers of pressure-sensitive adhesive 3 remain bonded to the interlayer 1 when the interlayer 1 is removed from the layer of goods 30 or when goods are individually removed from an interlayer 1.

- The bond between the pressure-sensitive adhesive 3 and the surface of the goods to be stabilized must be breakable without damage to the goods or to their packaging and/or without leaving adhesive residue.

These requirements are met by various PSAs, however, acrylate-based PSAs are preferred for use in the method of the present invention. Acrylate-based PSAs are readily available in a variety of known bonding strengths to a variety of substrates. They are also suitable for a wide variety of applications and have the well-known advantages of clarity and UV-stability. Acrylate-based pressure-sensitive adhesives and methods of their preparation are described extensively in Handbook of Pressure-Sensitive Adhesives (Ed. D. Satas, Third Edition, 1999).

Suitable acrylate-based PSAs comprise polymers or copolymers of acrylic and/or methacrylic esters that are inherently soft and tacky polymers having a low glass transition temperature ($T_g$). Preferred (meth)acrylate monomers for use in preparation of acrylic PSAs suitable for use in the present inventions comprise alkyl acrylate and methacrylate esters of non-tertiary alcohols comprising 4-17 carbon atoms where the homopolymer of the monomer has a $T_g$ of less than about 0° C. Monomers suitable for use in acrylic PSAs which can be employed in the present invention include, for example, n-butyl acrylate, isobutyl acrylate, hexyl acrylate, 2-ethyl-hexylacrylate, isooctyl acrylate, caprolactone acrylate, isodecyl acrylate, tridecylacrylate, laurylmethacrylate, methoxy-polyethylenglycol-monomethacrylate, lauryl acrylate, tetrahydrofurfuryl acrylate, ethoxyethoxyethyl acrylate and ethoxylated nonylacrylate. Especially preferred are 2-ethyl-hexyl acrylate, isooctyl acrylate and butyl acrylate. The low $T_g$ (meth)acrylate monomer is commonly present in preferred (meth)acrylate-based PSAs in an amount of 50-100 % by weight.

Optionally, one or more ethylenically unsaturated co-monomers may be copolymerzed with the (meth)acrylate ester monomer described above in amounts of between 0 and 50 weight % to improve cohesive strength of the adhesive and/or provide other desirable characteristics. One class of useful comonomers includes those having a homopolymer glass transition temperature ($T_g$) greater than the glass transition temperature of the homopolymer of the (meth)acrylic esters listed in the preceding paragraph. Examples of suitable monomers falling within this class include acrylic acid, acrylamide, methacrylamide, substituted acrylamides such as N,N-dimethyl acrylamide and N,N-diethylacrylamide, itaconic acid, methacrylic acid, vinyl acetate, N-vinyl pyrrolidone, isobornyl acrylate, cyanatoethyl acrylate, N-vinylcaprolactam, maleic anhydride, hydroxyalkylacrylates, N,N-dimethylaminoethyl(meth)acrylate, beta-carboxyethylmethacrylate, vinylidene chloride, styrene, vinyl toluene and alkyl vinyl ethers.

The bonding characteristics (such as the bonding strength and the ease of removability) of exposed layers of acrylate-based PSAs 3 from various substrates such as the sheet materials 2 or the layer of goods 30, respectively, can not only be controlled by the monomers selected, but can also be controlled significantly by the use of crosslinking methods. Crosslinking is a method of creating an increased number of intermolecular ionic or covalent bonds which act to increase the effective molecular weight of the acrylate-based PSAs. Crosslinking can be provided during the synthesis of the pressure-sensitive adhesive 3 by adding small amounts of multifunctional monomers such as hexanediol diacrylate (HDDA), for example. Crosslinking may also be provided during post-curing of formed pressure-sensitive adhesive layers using thermal crosslinking or UV radiation curing techniques. Acrylate-based PSAs which are at least lightly crosslinked are most preferred for use in the present invention in that they have the inherent properties of low initial tack and low adhesion build over time. Both of these properties provide advantageous characteristics to interlayers 1 bearing exposed layers of pressure-sensitive adhesive 3, as they are intended to be removable from packaging materials such as paper, cardboard and low surface energy polyolefin films.

Removability of exposed layers of PSAs 3 from packaging materials may not only be influenced by choice of monomer and cross-link density, but may also be controlled by variation in coating weight or coating geometry of the exposed layer of PSA 3. The bonding strength of the exposed layer of PSA 3 to packaging materials may be significantly reduced by reducing the thickness of the exposed layer of PSA 3. Coating geometries such as application of small spots of conventional PSAs via screen-printing, gravure printing or spraying may also serve to reduce adhesion and promote removability as described in US Patent 5,194,299 and US Patent 4,587,152.

Acrylate-based PSAs employed in the present invention may also comprise common additives such as, for example, tackifying resins, plasticizers, fillers, antioxidants, UV-stabilizers, pigments and/or dyes.

Especially preferred PSAs are acrylate-based PSAs comprising pigments or dyes. Such pigments or dyes can be mixed with the adhesive prior to or during coating onto the sheet material 2 in amounts of preferably between 0.1 % and 5.0 % by weight. Use of pressure-sensitive adhesives comprising pigments or dyes is preferred so as to give a visual indication as to the presence and location of exposed layers of pressure-sensitive adhesives 3 on the interlayer 1. Particularly, in embodiments of the invention where an exposed layer of PSA is located only on one major surface of an opaque sheet material 2 comprising, for example, paper, it can be advantageous for a human user to be able to quickly visually recognize which major surface of the interlayer 1 bears the exposed layer of adhesive 3.

Pigments and dyes for inclusion in the exposed layer of pressure-sensitive adhesive 3 may also comprise those that are fluorescent or phosphorescent. Use of such photoluminescent pigments enables detection of the presence or absence of an adhesive layer 3 on the sheet material 2 by the use of optical detectors, such as those described in European patent application number 1 121 444.2 filed on September 7, 2001 by the present Applicant.

The selection of PSA for use in the method of the present invention is based primarily on the type and sensitivity of the packaging and/or outer surfaces, respectively, of the goods to be stacked on a supporting substrate. Sensitivity of packaging materials refers to the tendency of some packaging materials such as cardboard or paper to delaminate when separated from aggressive PSA layers and/or the tendency of some polymeric films to stretch and tear when separated from aggressive PSA layers. Sensitive packaging material also includes packaging materials bearing a layer of ink or graphics on their outer surfaces which may be removed by contact with aggressive PSAs.

When the goods to be stabilized comprise film-based packaging materials, most acrylate PSAs (including relatively aggressive ones) can be employed as the exposed layer of PSA 3 on the interlayer 1. A majority of acrylate-based PSAs are known to bond relatively weakly to low-surface energy polymeric films commonly used to wrap consumer goods when they are stacked on pallets, for example. Low-surface energy polymeric films are defined as those having a surface energy of less than ca. 35 dynes/cm as measured according to DIN 53364. Preferred PSAs for use with polymeric film packaging materials are those with a 90° peel adhesion from LDPE of less than 7.0 N/cm as measured according to the test method disclosed in the Test Methods section below.

When the outer surfaces of the goods to be stabilized comprise papers and cardboards, these are more likely to delaminate (as compared to film-wrapped goods) when the interlayers and goods are separated from one another. Thus such goods require that less aggressive adhesives be employed as the exposed layer of PSA 3. Preferably, the PSAs selected for use on interlayers 1 intended to contact goods comprising papers and/or cardboard surfaces are those which are cleanly removable from papers and cardboards. Preferably, the exposed layer of PSA 3 has a 90° peel adhesion from paper of less than 5.0 N/cm more preferably of less than 3.0 N/cm and most preferably of less than 2.0 N/cm. The 90° peel adhesion is measured in each case according to the test method disclosed in the Test Methods section below.

Preferred removable PSAs which meet the above criteria are described in US Patent 4,755,550 and US Patent 5,552,451, for example.

Especially preferred PSAs that are removable from papers, cardboards and polymeric films comprise tacky polymeric, elastomeric, solvent insoluble but solvent dispersible microparticles of an acrylate-based pressure-sensitive adhesive which may be optionally crosslinked. The adhesive microparticles are generally spheroidal in shape though they need not be perfectly spheroidal. They typically have an average diameter in the range of from 1 to 300 (preferably from 1 to 50) μm. The microparticles may be solid or hollow. Hollow microparticles may contain more than one void. Typically the hollow or void portion of the microparticles is less than 100 μm on the average.

Preferred microparticle -containing pressure-sensitive adhesives and methods of manufacturing them are disclosed in US 5,626,955, column 5, line 46 to column 11 line 50. An especially preferred microparticle-containing PSA is the "microsphere K" disclosed in US 5,626,955.

The pressure-sensitive adhesive 3 may be pre-applied to the sheet material 2 so that it is already attached to the sheet material 2 when being stored in the form of a stack or a roll, for example, or it may be applied semi-continuously to the sheet material 2 in an optional additional step of using the method of the present invention. If the pressure-sensitive adhesive 3 is pre-applied to one major surface of the sheet material 2, stacking of the sheet material often requires that a release material 5 is applied to the second major surface of the sheet material 2 and/or that the pressure-sensitive adhesive 3 is specifically selected. If the pressure-sensitive adhesive is pre-applied to both major surfaces of the sheet material 2, the use of an additional release liner is often required if the pressure-sensitive adhesive is arranged on the two major surfaces of the sheet material in an overlapping or directly opposing configuration, respectively. Since no specific selection of the pressure-sensitive adhesive and/or no additional release liner are required when applying the pressure-sensitive adhesive 3 semi-continuously as an additional step within the method of the present invention, such method of application is preferred.

In the semi-continuous method of the present invention, an exposed layer of pressure-sensitive adhesive 3 may be applied to one or both major surfaces of the sheet material 2 by any of several methods, including application of self-supporting layers of pressure-sensitive adhesives (transfer tapes), application of double-coated pressure-sensitive adhesive tapes, or direct application such as coating or extruding of pressure-sensitive adhesive layers.

The thickness of the exposed layer of pressure-sensitive adhesive 3 present on one or both major surfaces of the sheet material 2 is preferably between 2 μm and 300 μm. More preferably, the thickness of the layer or layers, respectively, of exposed PSA 3 is between 15 μm and 100 μm.

A first preferred method of providing the exposed layer of PSA 3 is by adhering a single layer of self-supporting pressure-sensitive adhesive (known as a transfer tape) to at least one surface of the sheet material 2. Examples of such transfer tapes include those commercially available from 3M Company, St. Paul, MN/USA as # 465 Adhesive Film without Carrier (acrylate-based, 0.05 mm thick), # 467 MP Adhesive Film without Carrier (acrylate-based, 0.05 mm thick), # 468 MP (acrylate-based 0.13 mm thick) and # 927 Adhesive Film without Carrier (acrylate-based, 0.05 mm thick).

In a second preferred method, the exposed layer of PSA 3 is provided by adhering a double-coated adhesive tape 9 to at least partially cover at least one major surface of a sheet material 2. A double-coated tape 9 comprises a backing layer 8 bearing an exposed layer of adhesive material on each major surface of the backing 8. The double-coated adhesive tape 9 comprises an exposed layer of pressure-sensitive adhesive 3 on the major surface of the tape 9 which remains exposed after its application to the sheet material 2, but the adhesive on the opposing major surface of the tape 9 (bonded to the sheet material 2) can be selected from a broader group of adhesive materials comprising heat-activated adhesives and water-activated adhesives as well as pressure-sensitive adhesives. The backing layer 8 of the double-coated adhesive tape 9 can comprise polymeric film, paper, polymer-coated papers, non-woven webs, metal foils, cloth or the like. Double-coated tapes 9 comprising backings 8 of polymeric films are preferred. Double-coated tapes 9 comprising polymeric film backings and pressure-sensitive adhesive layers 3 on both major surfaces of the backing 8 are especially preferred. Specific examples of commercially available double-coated pressure-sensitive adhesive tapes which can be employed in the method of the present invention include those commercially available from 3M Company, St. MN/USA as # 410 Double-coated tape with paper carrier (rubber-based PSA, 0.13 mm thick), # 415 Double-coated tape with polyester film carrier (acrylate-based PSA, 0.1 mm thick), # 444 Double-coated tape with polyester film carrier (acrylate-based PSA, 0.1 mm thick), # 665 Linerless double-coated tape with acetate film carrier (acrylate-based PSA, 0.09 mm thick), # 9415 Double-coated tape with polyester film carrier (acrylate-based PSA, 0.08 mm thick) as well as # 5761 Double-coated adhesive tape from Sekisui Chemical (Osaka, Japan) (acrylate-based, non-woven backing, 0.12 mm thick).

Preferred double-coated pressure-sensitive adhesive tapes 9 which can be employed in the method of the present invention also include water-dispersible or repulpable adhesive tapes comprising tissue paper backings commonly employed in the paper manufacturing industry, such as, for example, # 913 Repulpable Double-coated Splicing Tape for Newsprint (double-coated tissue paper, 0.08 mm thick), # 9112 Repulpable Splicing Tape (acrylate-based) and # 9974 B Repulpable Splicing Tape (double-coated tissue, 0.08 mm thick), all obtainable commercially from 3M Company, St. Paul, MN/USA.

Most preferred double-coated adhesive tapes 9 for application to the sheet material 2 comprises those adhesive tapes which comprise differing layers of PSA 3 on each of the major surfaces of the tape backing 8, where the PSAs are sufficiently different so that their adhesion to a single substrate such as paper differs significantly. Such double-coated adhesive tapes 9 having "differential adhesion" behavior described above are available as # 665 Linerless double-coated tape with acetate film carrier (acrylate-based PSA, 0.09 mm thick), # 9415 Double-coated tape with polyester film carrier (acrylate-based PSA, 0.08 mm thick) as well as # 5761 Double-coated adhesive tape from Sekisui Chemical (Osaka, Japan) (acrylate-based, non-woven backing, 0.12 mm thick). In linerless double-coated pressure-sensitive adhesive tapes 9, the pressure-sensitive adhesives applied to the two major surfaces of the backing 8 are selected so that the double-coated adhesive tape 9 can be wound upon itself without requiring a release liner.

In a third preferred method, the layer of exposed pressure-sensitive adhesive 3 is applied directly to the sheet material 2 (i.e. not as a pre-formed tape). Any conventional method of direct formation of an adhesive layer on the sheet material 2 may be employed, including coating from solvent or water (followed by drying) and solventless techniques. Preferred are solventless techniques where the adhesive layer need not be dried. Of the preferred solventless coating techniques, those are especially preferred where no post-curing of the adhesive layer by thermal or irradiation methods is required. An example of direct application of the exposed layer of PSA 3 onto the sheet material 2 is by extrusion and hot-melt coating. Examples of commercially available hot-melt pressure-sensitive adhesives which can be employed in the method of the present invention include ethylene-vinyl acetate (EVA) pressure-sensitive adhesives (available, for example, as LEVAMEL™ from Bayer AG, Leverkusen/Germany), synthetic-rubber resin PSAs which can be compounded, for example, from styrene-isoprene-styrene triblock polymers such as CARIFLEX™ synthetic rubbers (available from Shell Chemicals) and acrylate-based PSAs available as AC RESIN 928 from BASF, for example. Hot-melt coating methods include those where a uniform layer of pressure-sensitive adhesive is laid down by a slot die, for example, as well as those where a thin stream of melted pressure-sensitive adhesive is sprayed onto the sheet material. Equipment for hot-melt spray (melt-spinning) application of the exposed layer of pressure-sensitive adhesive 3 is available commercially as Series 3000 V PC from Nordson Deutschland GmbH, Erkrath/Germany).

In any of the three application methods just described, the exposed layer of pressure-sensitive adhesive 3 can be provided to the entire surface of one or both major surfaces of the sheet material 2. Preferably, the exposed layer of pressure-sensitive 3 is provided only on an area covering between 1 % and 95 % of the surfaces) of the sheet material 2 to which pressure-sensitive adhesive layers 3 are applied. More preferably, between 5 % and 30 % of the surface(s) of the sheet material 2 to which pressures-sensitive adhesive layers 3 are applied is provided with exposed pressure-sensitive adhesive 3.

Furthermore, the exposed layer of pressure-sensitive adhesive 3 may be provided in any geometrical shape including spots, stripes or shapes with complex outlines provided by die-cuts. Preferably, the exposed pressure-sensitive adhesive layer 3 is provided in the form of a stripe.

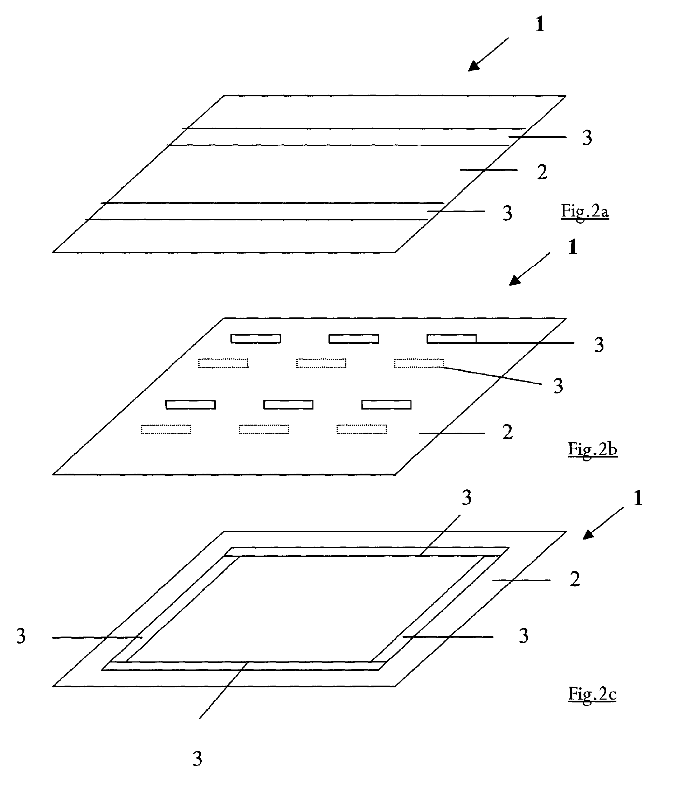

Said stripes of exposed layers of pressure-sensitive adhesive 3 may be also applied in a continuous or discontinuous manner. Stripes applied in a continuous manner are shown, for example, in Figure 2a. Stripes applied in a discontinuous manner to both surfaces of the sheet material 2 are shown, for example, in Figure 2b. Because discontinuous stripes may require additional application equipment, continuous stripes are more easily provided and are thus preferred.

The stripes of exposed layers of pressure-sensitive adhesive 3 may be provided on one or both of the major surface(s) of the sheet material 2 in any of several geometric arrangements selected in view of the size, shape and the type of the goods or the packaging of the goods, respectively, to be stacked on the supporting substrate.

Preferably, stripes of the exposed layer of PSA 3 are placed at a distance of at least 2 cm from the edges of the sheet material 2 so as to form a "fingerlift" and to facilitate either manual or mechanical grasping of the interlayer 1 without contacting an exposed layer of pressure-sensitive adhesive 3.

The interlayers of the present invention 1 are useful for inclusion between layers of goods 30 on a supporting substrate such as a pallet, for example. The term "goods" refers to any article 31 suitable for stacking on a supporting substrate and may refer both to a single piece of goods and to a multitude (i.e. 2 or more) pieces of goods.

The goods 31 may be the same size and shape or may differ. Goods 31 may comprise regular cubes or prisms, such as cardboard boxes, for example, or may also comprise irregularly shape bundles having bulging surfaces such as film wrapped packages of disposable hygiene materials such as diapers, paper towels or toilet tissue.

The exposed packaging material of the goods 31 may comprise one or more materials selected from a group comprising papers, cardboard, polymeric films, painted wood, metal, non-woven webs or composite multilayer materials such as poly-coated papers, for example. Preferably interlayers 1 of the present invention are used to stabilize stacks of layers of goods 30 on supporting substrates where the exposed packaging of the goods 31 and/or an exposed additional wrapping of one or more pieces of goods comprises a polymeric film. Most preferably, the interlayers 1 of the present invention are used to stabilize stacks of goods where the exposed wrapping of polymeric film comprises a polyolefin.

The goods 31 in a single layer are preferably similar in size and shape so as to facilitate the use of an interlayer 1. The goods 31 are preferably arranged in layers, where a layer comprises at least one piece of goods. A single interlayer 1 can be used on top of a single layer of goods. At least two layers of goods 30 are preferably stacked upon one another. An interlayer is preferably placed in the interface between each pair of adjacent layers of goods as the stack on the pallet is prepared.

More than one interlayer 1 can be used between two adjacent layers of goods, respectively. For example, two interlayers, each having a surface are much less than the surface area of the upper surface of the layer of goods, may be placed adjacent to one another.

The layers of goods 30 may comprise any number and shape of goods 31, but it is preferred that a single layer of goods 30 comprises a relatively flat and continuous upper surface to facilitate contact of the upper surface of such layer of goods 30 with an interlayer 1.

The layer of goods may also comprise, for example, sacks with exposed surfaces of paper or polymeric film containing such loose materials as fertilizer, grain or laundry powder, for example.

One preferred arrangement of goods on a supporting substrate such as a pallet, using one or more interlayers 1 of the present invention is one where each of the individual goods in each layer of goods has contact with an exposed layer of pressure-sensitive adhesive 3 on an interlayer 1. This arrangement is especially preferred when the goods are light weight and bulky (low density) such as film-wrapped packages of disposable diapers, for example, which often need to be stabilized on the pallet not only during shipment, but also after outer pallet wrapping films have been removed.

A first preferred arrangement of goods and interlayers 1 on a supporting substrate such as a pallet is described in the following example. Box-like packages are arranged on a pallet in a first layer of goods 30 comprising thirty-six packages in a six-by-six array. An interlayer 1 is then selected, wherein six equidistant stripes of exposed pressure-sensitive adhesive 3 are present on each major surface of the sheet material 2 in a manner such that the adhesive stripes are directly opposing one another. A second layer of goods 30', also comprising a six-by-six array is placed on top of the interlayer 1. In this arrangement, each of the thirty-six packages in each layer of goods 30, 30' is contacted and secured by an exposed layer of pressure-sensitive adhesive 3 and is removably bonded to the interlayer 1 to increase the stability of the loaded pallet.

A second preferred arrangement of goods on a supporting substrate such as a pallet is one where interlayers 1 bearing only two adhesive stripes parallel and adjacent to two opposing edges of the interlayer on one or both major surfaces are employed. In this arrangement, the interlayer 1 blocks the layer of goods 30 together without adhesive contact with each article 31. This configuration prevents individual articles 31 from separating from the pallet load and also prevents entire layers of goods 30 from slippage with respect to other adjacent layers. An interlayer 1 bearing two stripes of exposed pressure-sensitive adhesive 3 parallel and adjacent to two opposing interlayer edges is shown, for example, in Figure 2a. An interlayer 1 bearing four stripes of exposed pressure-sensitive adhesive 3 parallel and adjacent to the four interlayer edges is shown, for example, in Figure 2c.

The interlayer 1 may be employed in the interface between adjacent layers of goods 30, 30' stacked on the supporting substrate, but may also be used in the interface between the first layer of goods 30 and the supporting substrate itself. The interlayer 1 of the present invention may also be applied to the upper surface of the uppermost layer of goods. When interlayers 1 are employed as an uppermost layer on a stack of goods, it is preferred that the interlayer 1 has only one major surface bearing an exposed layer of PSA 3 and that this surface is facing downward (not exposed on the top of the loaded pallet).

When interlayers bearing an exposed layer of PSA 3 on only one major surface of the sheet material 2, are employed it is preferred that the adhesive-bearing surface of the interlayer 1 be placed facing downwards. This helps to insure that the interlayer 1 remains with the lower layer of goods 30 as the pallet is unloaded.

When interlayers 1 bearing an exposed layer of PSA 3 on both major surfaces of the sheet material 2 are employed, then the PSAs 3 on the two major surfaces of the sheet 2 material of the interlayer 1 are preferably selected such that the adhesion to the lower layer of goods is greater than the adhesion to the upper layer of goods. This also helps insure that the interlayer 1 remains attached to the lower layer of goods during unloading operations.

In the semi-continuous method of the invention, there are no restrictions as to the placement of the exposed layers of pressure-sensitive adhesive 3 on either or both of the major surfaces of the sheet material 2. This is one of the important advantages of the method of the present invention. The overall surface coverage to which the first and/or second major surfaces, respectively, of the interlayer 1 are provided with exposed layers of pressure-sensitive adhesive 3, the type of adhesive and the arrangement of adhesive stripes (for example), can be chosen easily and changed quickly without regard to any restrictions, imposed by an intermediate step of rolling or stacking of any adhesive-bearing continuous or discontinuous interlayers 1, respectively. Because of the absence of such restrictions, particularly with respect to the arrangement and/or geometries of exposed layers of PSAs 3, the semi-continuous process can be readily adapted to provide a variety of interlayers 1 whose characteristics can be selected freely, as required by packaging variables including the shape, size, compression characteristics, weight and packaging material employed on the goods to be stacked on the pallet.

A further advantage of the method of the invention lies in that each of the major surfaces of the sheet material 2 may have more than 50 % of its surface area covered by an exposed layer of PSA 3 without special selection of the PSA.

A further advantage of the method of the invention lies in that stripes of exposed pressure-sensitive adhesive 3 can be placed on the sheet material 2 exactly in positions most likely to be contacted by soft non-symmetrical film-wrapped packages such as those in which paper towels and toilet tissue are commonly offered for sale.

A further advantage of the method of the present invention is that the method is compatible with high speed packaging lines prevalent in today's commodity industries. Goods can be taken off the packaging line and stacked on supporting substrates such as pallets for transport at high speed. The type of interlayer produced can be adjusted rapidly and employed with a variety of packaging lines with low down-time when alternative configurations are required.

A further advantage of the method of the present invention lies in its ability to generate in a semi-continuous process preferred interlayers 1 bearing layers of exposed pressure-sensitive adhesive 3 in a geometry where the two exposed layers of PSA 3 are directly opposing one another on opposite major surfaces of the sheet material 2. Use of such interlayers 1 provides an advantage when stabilizing bulky goods that do not offer uniform and flat surfaces for contact with the interlayer 1. Such bulky goods often consist of light-weight, rounded low-density packages which only have contact with the interlayer 1 in the center of their upper and lower surfaces, respectively. Stabilization of such goods is facilitated by directly opposing layers of PSA 3 on the two opposite major surfaces of each interlayer 1, rather than offset or staggered configurations which are less likely to contact the limited surface area of the goods which presents itself as available for contact and/or adhesive bonding with the interlayer 1.

Finally, the semi-continuous method of the invention eliminates the disadvantageous requirements of known methods where the interlayer 1 needs to be designed specifically with careful selection of sheet material, adhesive type and/or adhesive geometry so that the adhesive-bearing interlayer 1 can be rolled up (or, alternatively, cut and stacked upon itself to form a pad) and then unrolled (or, alternatively, removed from a pad) before it is applied to a layer of goods.

The present invention also provides a device 10 for preparing stabilized stacks of goods on a supporting substrate in a semi-continuous fashion comprising a) a supply of continuous or discontinuous sheet material 2 having first and second major surfaces, b) means for applying an exposed layer of pressure-sensitive adhesive 3 to at least partially cover at least one of said major surfaces of said sheet material 2, and optional means for cutting said continuous sheet material, said means allowing to form an interlayer 1, c) means 20 for applying said interlayer to the upper surface of a layer of goods supported on a pallet and d) optional means 25 for automatic stacking of a second layer of goods on top of the interlayer.

The device 10 of the present invention comprises a supply of a continuous or discontinuous sheet material 2.

When the sheet material supply comprises a continuous roll of sheet material, the roll can have any width and length, however, the length is preferably that which can be handled conveniently by conventional web handling equipment. A length of between 400 m and 10,000 m is most preferred. The width of the continuous sheet material can be any width, but is preferably chosen to not be greater than the width of the pallet to be stabilized. Most preferably, the width of the continuous roll is not greater than about 120 cm because the lateral surface area of the standardized so-called "Euro-pallet" has dimensions of 80 cm X 120 cm. Thus the selection of a roll width of not greater than 120 cm will allow interlayers of practical size to be cut conveniently from the continuous roll in a single cross-web cutting step.

When the sheet material supply operates discontinuously the sheet material 2 can be in any flat, sheet-like form of any shape. The sheet material 2 is preferably in the form of pre-cut square or rectangular sheets, however. The sheets can be of any size, but preferably have a surface area not greater than the surface area of a conventional pallet such as the "Euro-pallet", for example, having the horizontal surface dimensions of 80 cm X 120 cm.

The device 10 of the invention also comprises a means for applying an exposed layer of pressure-sensitive adhesive 3 to at least partially cover at least one major surface of the sheet material 2. The means for applying an exposed layer of pressure-sensitive adhesive 3 includes any device commonly used for applying pressure-sensitive adhesive tapes or pressure-sensitive adhesive layers to continuous webs or sheet materials and can be selected from a group comprising tape application heads for applying single-layers of self-supporting pressure-sensitive adhesive tape (transfer tape), tape application heads for applying double-coated adhesive tapes, hot-melt coaters for applying single layers of adhesive, as well as knife-coaters, screen-printing devices, roll coaters and spraying devices which are capable of applying a layer of 100 % solids pressure-sensitive adhesives, or solvent-based or water-based solutions or dispersions of pressure-sensitive adhesives, respectively.

A first preferred means for applying an exposed layer of pressure-sensitive adhesive 3 to a sheet material 2, to at least partially cover at least one major surface of the sheet material 2, comprises at least one tape application head 15 especially designed for applying single self-supporting layers of adhesive (transfer tapes) or double-coated adhesive tapes to sheet materials. Tape application heads 15 are preferred because they directly apply a pre-formed layer of PSA 3 and do not require that additional equipment such as drying ovens or UV-curing stations be employed to dry or cure the exposed layer of pressure-sensitive adhesive 3. Tape application heads 15 are also preferred because

EP 1 386 863 A1

they can be readily adapted to apply a wide variety of adhesive tapes and can be moved easily in the cross-web direction to accommodate a variety of geometries.

In embodiments of the device 10 where the sheet material 2 comprises a continuous roll, the device 10 of the invention also comprises a means for cutting the continuous web of sheet material. The means for cutting can be selected from any conventional means whereby a continuous web can be cleanly severed in the cross-web direction, including moveable knives, guillotine type knives and heat sources such as heated wires and laser beams, for example.

The device 10 of the invention also comprises a means 20 for applying the interlayer 1 to the upper surface of a layer of goods 30 on a supporting substrate such as a pallet and/or for applying an interlayer 1 to the upper surface of the supporting substrate itself. Preferred is an automated means 20 for grasping interlayers 1 and placing them on layers of goods 30 on a supporting substrate. Such automatic equipment is commercially available, for example, as Model Kettner R59 from Kettner GmbH (Rosenheim/Germany) and can be easily modified to work in co-operation with portions of the device 10 designed to apply exposed layers of PSA 3 to the sheet material 2. It is preferred that the automated equipment for grasping the interlayers 1 and placing them on the layers of goods 30 comprises elements such as gripper arms 21 for grasping the leading edge of the interlayer 1 directly after the exposed layer of pressure-sensitive adhesive 3 has been applied to the sheet material 2 and the interlayer 1 has optionally been cut from a continuous roll of sheet material 2. It is also preferred that the means 20 for grasping and placing the interlayer 1 also include one or more suction cups 24 for holding the interlayer 1 and securing it during transport and application to the layer of goods 30. Suction cups 24 can be readily utilized to grasp interlayers 1 in areas where no exposed layer of pressure-sensitive adhesive 3 is present. When interlayers 1 are prepared with exposed layers of pressure-sensitive adhesive 3 on the upper surface of the sheet material 2, care must be taken to grasp the interlayer 1 in a manner so that the interlayer 1 can be released from the means 20 for grasping and placing. The means 20 for grasping and placing the interlayer on the layer of goods 30 also preferably comprises a moveable lamination roller coated with release material which presses the interlayer 1 bearing an exposed layer of pressure-sensitive adhesive 3 down onto the layer of goods 30 after the interlayer 1 has been placed in contact with the layer of goods 30.

The device 10 of the present invention may optionally include a means 25 for automatic stacking of an additional layer of goods 30' on top of the interlayer 1. Such automated systems are commercially available from TRAPO Foerdertechnik (Gescher-Hochmoor, Germany), CSi (Raandonksvoor, The Netherlands) and HD Automations GmbH (Westerkappeln, Germany), for example.

Preferably, the means for automatic stacking 25 comprises a conveyor belt working in co-operation with both a robotic grasping arm (not shown in a Figure) and an adjustable pallet support 27 for facilitating control of movement of the pallet 32. Individual packages of goods 31 are advanced along a conveyor belt, grasped by the robotic arm at the end of the conveyor belt, and then placed onto a supported pallet 32. As new goods 31 advance on the conveyor belt, the alignment (x-y direction) and height (z-direction) of the pallet 32 may be changed automatically to receive goods until an array or layer of goods 30 is generated.

A preferred component of the device 10 comprises a mechanical, automated and co-operative combination of a means 20 for applying the interlayer to the stack of goods and means 25 for stacking the goods on pallets. Such combined equipment is commercially available, for example, from ABB Flexible Automation (Zurich, Switzerland) as FlexPalletizer IRB640.

The device 10 of the invention can also operate in the absence of an automated stacking system 25, in which case a person can manually stack a layer of goods 30 on the pallet 32 in concert with the device 10 which prepares the interlayers 2 and applies them semi-continuously to the layer of goods using means 20.

The device 10 also preferably comprises web handling mechanisms commonly employed in the adhesive tape industry for the purposes of maintaining tension on the sheet material 2 and advancing the sheet material 2 through the device 10, as well as auxiliary equipment such as optical sensors for insuring that tape sections are cut and aligned with discontinuous sheet materials, for example, as they pass by the means for applying the exposed layer(s) of pressure-sensitive adhesive 3.

The present invention also provides new interlayers 1 for stabilizing stacks of goods on a supporting substrate, where the interlayer 1 comprises a sheet material 2, where at least one of the major surfaces of the sheet material 2 is at least partially covered with an exposed layer of pressure-sensitive adhesive 3.

One group of preferred interlayers 1 which can be conveniently and easily prepared using the device 10 and method of the present invention are described first. These interlayers 1 cannot be rolled or stacked upon themselves in an intermediate step before use in palletizing, and are made by a method of the present invention where an exposed layer of pressure-sensitive adhesive is applied in step b). These include both Type 1 interlayer and Type 2 interlayer defined below.

Type 1 describes those interlayers which cannot be stacked or rolled in an intermediate step prior to use in palletizing operations because during such stacking or rolling, inappropriate adhesive-adhesive contact would occur which would prevent or hinder separation of interlayers. A type 1 interlayer comprises an exposed layer of pressure-sensitive adhesive 3 at least partially covering both first and second major surfaces of the sheet material 2 in such a

11

configuration, that if a first interlayer 1 and a second interlayer 1' were superimposed, the exposed layer of pressure-sensitive 3 on the first major surface of a first interlayer 1 would at least partly overlap with an exposed layer of pressure-sensitive 3' on the second major surface of a second, superimposed interlayer 1'.

Type 2 describes those interlayers 1 which cannot be stacked or rolled in an intermediate step prior to use in palletizing operations because during such stacking or rolling, inappropriate contact of an exposed layer of pressure-sensitive adhesive 3 with an easily damagable or easily delaminatable sheet material 2, such as paper, would occur which would prevent or hinder separation of interlayers. Specifically, a type 2 interlayer comprises a sheet material 2 having first and second major surfaces, where at least one major surface of the sheet material 2 is at least partially covered by an exposed layer of pressure-sensitive adhesive 3, and where the sheet material 2 comprises paper and where the pressure-sensitive adhesive layer 3 is selected such that, if a first interlayer 1 is superimposed upon a second interlayer 1', separation of the interlayers 1, 1' would result in damage to the sheet material 2 or deposit of adhesive residue on the sheet material 2.

A second group of preferred interlayers 1 and a stack 40 comprising at least a first interlayer 1 and a second interlayer 1' is one where the interlayer 1 employs two differing exposed layers of pressure-sensitive adhesives 3 on each of the two major surfaces of the sheet material 2, respectively. Certain double-coated adhesive tapes are known to be superimposable upon themselves without permanent bonding. These special pressure-sensitive adhesive tapes are called linerless double-coated tapes and are commercially available, for example, as # 665 Linerless Double-coated Tape with acetate film carrier (acrylate-based PSA, 0.09 mm thick) from 3M company, St. Paul, MN/USA. As noted above, these double-coated adhesive tapes can be used in the semi-continuous method of the present invention. These special double-coated adhesive tapes can specifically be used to make interlayers 1 that are superimposable in the form of stacks 40 or rolls without intervention of a liner. These double-coated adhesive tapes 9 useful in this embodiment of an interlayer 1 and a stack 40 comprise a backing bearing an exposed layer of acrylate-based PSA 3 on both of the opposing major surfaces of the tape backing 8. The pressure-sensitive adhesives 3 differ in chemical composition to the extent, however, that they do not flow together over prolonged periods so that they do not form a permanent bond. When employed to make superimposable interlayers, these adhesive tapes must be applied to sheet material 2 in a manner so that the two differing pressure-sensitive adhesives are in contact with each other when interlayers 1, 1' are superimposed. Interlayers comprising linerless double-coated pressure-sensitive adhesive tapes on both major surfaces of the sheet material 2 are preferably separable from one another with a 90° peel adhesion of less than 7 N/cm.

A third group of preferred interlayers 1 and a stack 40 comprising at least a first interlayer 1 and a second interlayer 1' is one where the interlayer 1 employs the same exposed layers of repositionable pressure-sensitive adhesives 3 on each of the two major surfaces of the sheet material 2, respectively. Most preferably, the repositionable pressure-sensitive adhesives useful in this manner comprises inherently tacky, elastomeric polymeric microspheres as described in US 3,691,140 (Silver) and US 4,166,152 (Ketola et al). Preferably, the force required to separate two such interlayers 1, 1' bearing exposed layers of such repositionable pressure-sensitive adhesives on both major surfaces of the sheet material 2 in opposing or overlapping configuration (after storage at 50° C for 3 days) is less than 5 N/cm. More preferably the separation force is less than 3 N/cm. Most preferably, the separation force is less than 2 N/cm.

Stacks 40 of the present invention, comprising a first interlayer 1 superimposed upon a second interlayer 1', preferably also comprise a backsheet having first and second major surfaces. A backsheet preferably serves as the lowermost layer of a stack 40, supports the stack 40 and protects the lowermost exposed layer of pressure-sensitive adhesive 3 from contamination. Preferred backsheets comprise paper or cardboard. Most preferably, the backsheet bears a layer of release material 5 on the major surface that contacts an exposed layer of PSA 3 of an interlayer 1.

Detailed Description of the Figures

Figure 1a shows a schematic representation of one embodiment of a portion of the device 10 of the invention. The portion of the device 10 depicts simultaneous application of double-coated adhesive tape 14 to both major surfaces of a sheet material 2. Two stripes of adhesive tape 14 are applied to each major surface of the sheet material 2 in a manner so that each stripe has an opposing stripe located directly opposite to it on the opposite major surface of the sheet material 2.

In the first embodiment of a portion of the device 10, as shown in Figure 1a, the sheet material 2 is provided in a discontinuous form comprising a stack of sheets. The sheets are pulled successively from the stack of discontinuous sheet material 2 and moved forward toward the adhesive tape application heads 15 in the direction defined herein as the down-web direction (also referred to as machine direction) using conventional sheet-handling equipment (not shown). Rolls of linered, double-coated adhesive tape 14 are supported on adhesive tape dispensing rolls 13. Tape application heads 15 contact the linered side of the double-coated adhesive tape 14, pressing the exposed face of the adhesive tape onto the sheet material 2 and bond it firmly. Release liner 17 is removed from the adhesive tape 14 and wound up on a liner take-up roll 16 directly after exiting from under the tape application head 15. Tape cutting elements (not shown) and control units which insure application of the tape in registration with the length of the sheet material (not shown) are preferred auxiliary equipment.

An electronically-controlled robotic device (not shown in Figure 1a) takes the interlayer 1 as obtained and places it on the upper surface of a layer of goods supported on a pallet. The device of the invention is preferably assisted by an automated system 25 (not shown in Figure 1a) which stacks additional layers of goods on the pallet in concert with placement of interlayers on the layers of goods by the robotic device 20.

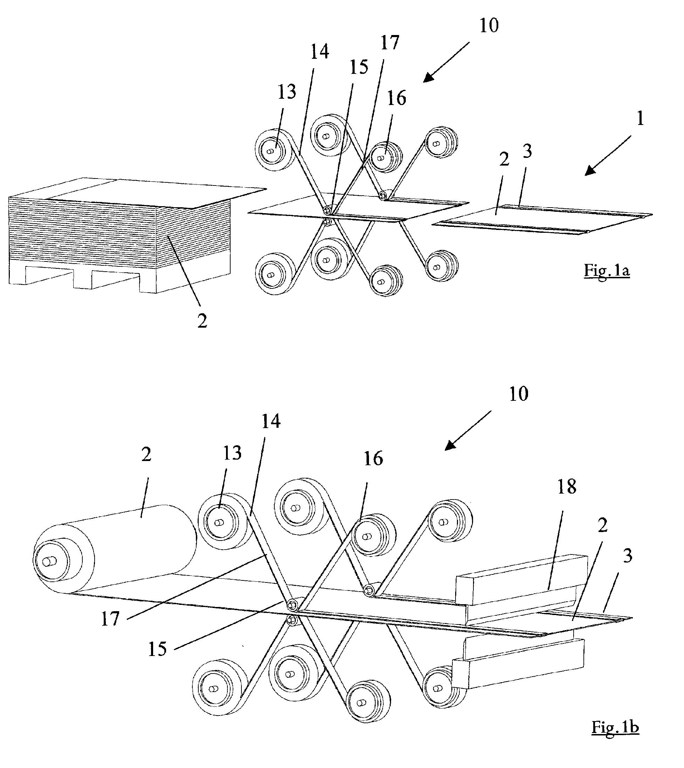

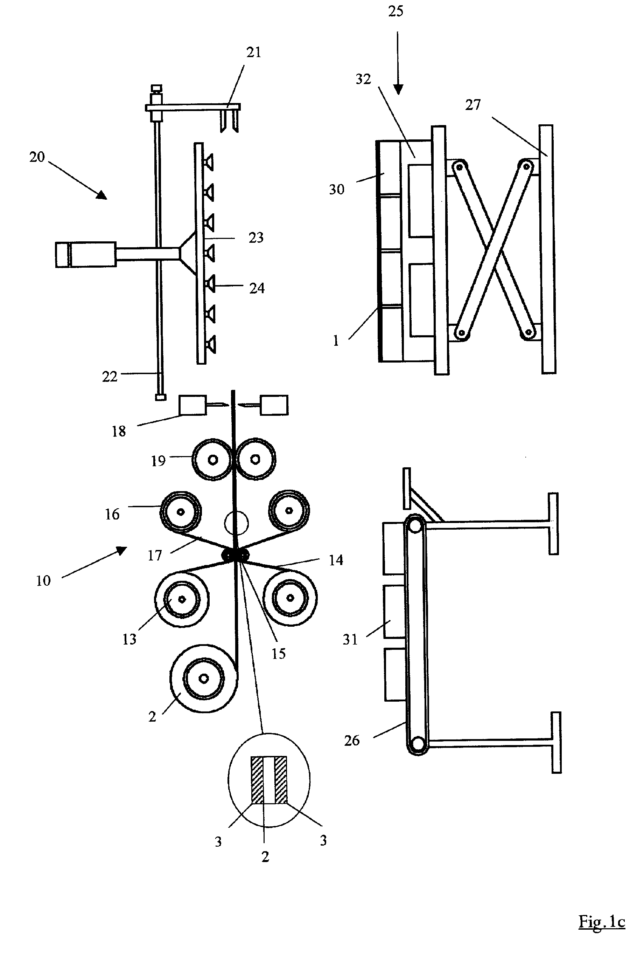

Figure 1b shows a schematic representation of a second embodiment of the device 10 of the invention. In the second embodiment of the device 10, the sheet material 2 is provided in the form of a continuous roll. The leading edge of the continuous roll of sheet material 2 is advanced forward towards the tape application heads 15, in the direction defined herein as the down-web direction (also referred to as machine direction), using conventional web-handling equipment (not shown). Rolls of linered, double-coated adhesive tape 14 are supported on adhesive tape dispensing rolls 13. Tape application heads 15 contact the linered-side of the adhesive tape, pressing the exposed face of the adhesive tape onto the sheet material 2 and bond it firmly. Release liner 17 is removed from the adhesive tape and wound up on a liner take-up roll 16 directly after exiting from under the tape application head 15. A knife 18 severs the adhesive-bearing continuous sheet material in the cross-web direction, thus forming a single finished interlayer 1.

Figure 1c shows a schematic representation of the complete device 10 including an electronically-controlled robotic device 20 that takes the interlayer 1 as obtained and places it on top of a layer of goods 30 on a pallet 32. The device of the invention 10 is optionally assisted by an additional automated system 25 (also shown in Figure 1c) which stacks additional layers of goods 30 on the pallet 32 in concert with placement of interlayers 1 on the layers of goods 30 by the robotic device 20.

Figures 2a-c are schematic representations of preferred geometries for applying exposed layer of PSA 3 to sheet materials 2 to form interlayers 1.

Figure 2a is a schematic view of an interlayer 1 bearing two continuous stripes of exposed pressure-sensitive adhesive 3 parallel and adjacent to two opposing edges of one major surface of the sheet material 2.

Figure 2b is a schematic view of an interlayer 1 bearing two discontinuous stripes of exposed pressure-sensitive adhesive 3 on both major surfaces of the sheet material 2. The discontinuous stripes of exposed pressure-sensitive adhesive 3 on the upper or lower major surfaces, respectively, of the sheet material 2 are shown in solid and dotted lines, respectively.

Figure 2c is a schematic view of an interlayer 1 bearing stripes of exposed pressure-sensitive adhesive 3 arranged parallel and adjacent to the four edges of one major surface of the sheet material 2.

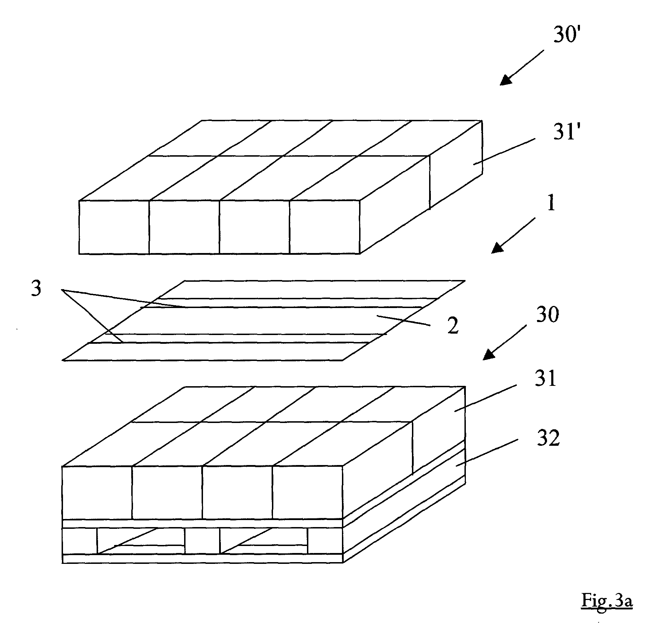

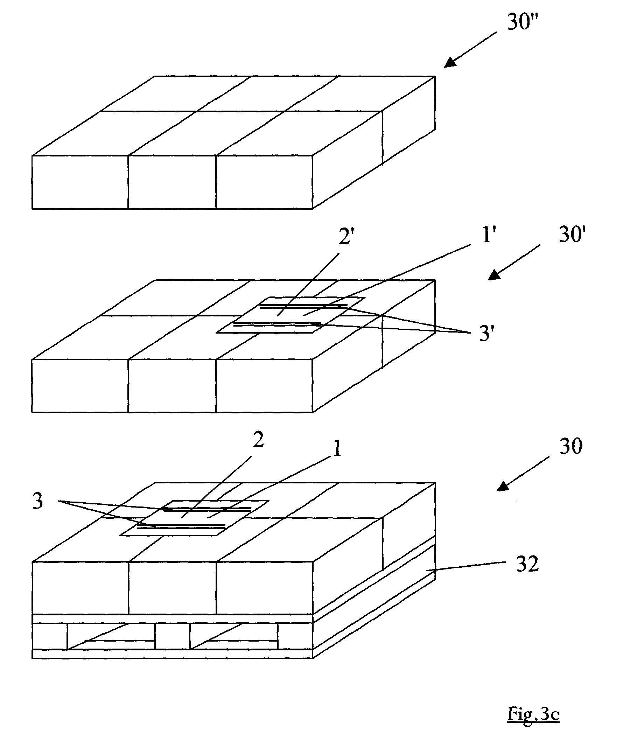

Figures 3a-3c show preferred stacking configurations of interlayers and layers of goods stacked on supporting surfaces such as pallets.

Figure 3a is a schematic diagram showing a configuration for stacking goods on a pallet 32 using an interlayer 1 where the interlayer 1 bears two stripes of exposed pressure-sensitive adhesive 3 on one major surface of the sheet material 2 and
where the interlayer 1 has approximately the same dimensions as the upper surface area of the pallet 32.

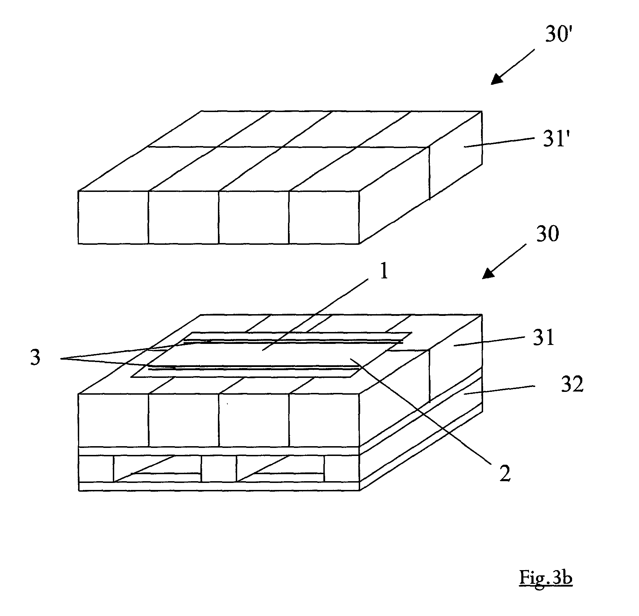

Figure 3b is a schematic diagram showing a configuration for stacking goods on a pallet 32 using an interlayer 1 where the interlayer bears stripes of exposed pressure-sensitive adhesive 3 on one major surface of a sheet material 2 and
where the interlayer 1 is centered with respect to the layers of goods 30, 30' and
where one major surface of the interlayer 1 has a surface area substantially less than the upper surface area of the pallet 32.

Figure 3c is a schematic diagram showing a configuration for stacking goods on a pallet 32 using an interlayer 1, where the interlayer bears two stripes of exposed pressure-sensitive adhesive 3 on one major surface of a sheet material 2, where the interlayer 1 is staggered with respect to the layers of goods 30 and where one major surface of the interlayer 1 has a surface area less than the upper surface area of the pallet 32.

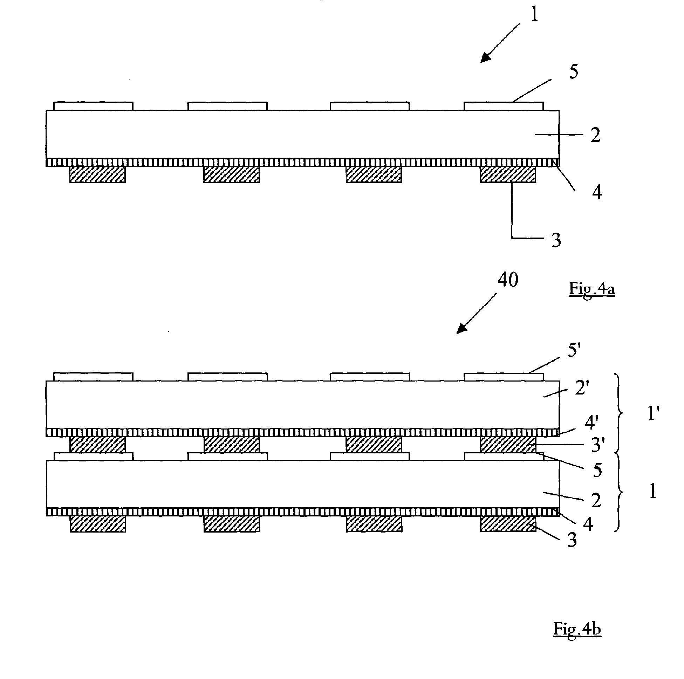

Figure 4a is a cross-sectional diagram of an interlayer 1 bearing a primer layer 4 and four parallel stripes of exposed pressure-sensitive adhesive 3 on one major surface of a sheet material 2, whereby the opposite major surface of the sheet material 2 bears four parallel stripes of release material 5 directly opposing the stripes of exposed pressure-sensitive adhesive 3.

Figure 4b is a cross-sectional diagram of a first interlayer 1 and a second interlayer 1' of Figure 4a superimposed upon one another to form a stack 40, whereby the interlayers 1, 1' are arranged upon each other so that the exposed pressure-sensitive adhesive stripes 3' of the interlayer 1' are in contact with the stripes of the release material 5 of interlayer 1.

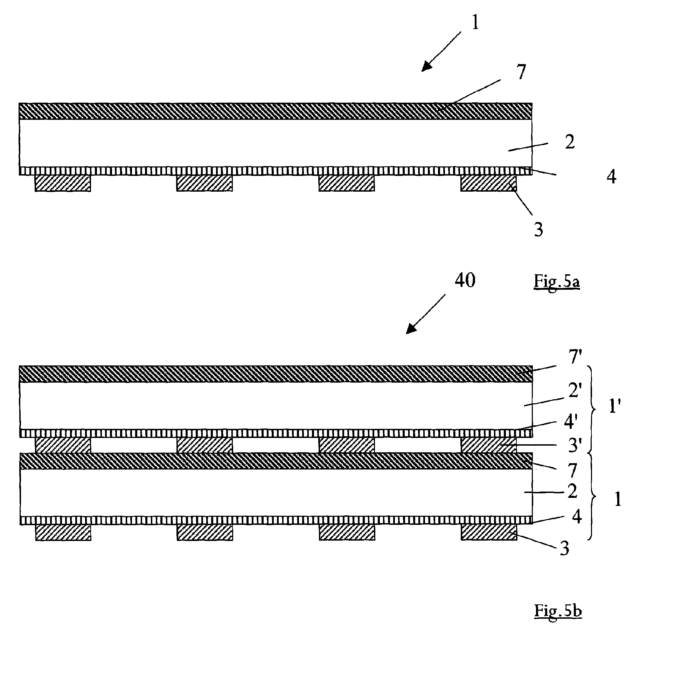

Figure 5a is a cross-sectional diagram of an interlayer 1 bearing a layer of high coefficient-of-friction polymer 7 on a first major surface of a sheet material 2, and a fully-coated primer layer 4 and four stripes of exposed pressure-sensitive adhesive 3 on a second major surface of the sheet material 2.

Figure 5b is a cross-sectional diagram of a first interlayer 1 and a second interlayer 1' of Figure 5a superimposed upon one another to form a stack 40, whereby the first interlayer 1 and the second interlayer 1' are arranged upon each other so that the exposed pressure-sensitive adhesive stripes 3' of the interlayer 1' contact the layer of high coefficient-of-friction material 7 of interlayer 1.

Figure 6a is a cross-sectional diagram of an interlayer 1 bearing stripes of pressure-sensitive adhesive 3 on both first and second major surfaces of a sheet material 2, arranged in a staggered configuration. Release material 5 is present on the sheet material 2 in areas opposing the exposed layers of pressure-sensitive adhesive 3.

Figure 6b is a cross-sectional diagram of a first interlayer 1 and a second interlayer 1' of Figure 6a superimposed upon one another to form a stack 40, whereby the first interlayer 1 and the second interlayer 1' are arranged upon each other so that the exposed pressure-sensitive adhesive stripes 3' of the interlayer 1' are contacting the release material 5 of interlayer 1.

Figure 7a is a cross-sectional diagram of an interlayer 1 bearing stripes of pressure-sensitive adhesive 3 on both first and second major surfaces of a sheet material 2, the stripes being arranged so that they directly oppose each other. A layer of primer 4 is present between the exposed pressure-sensitive adhesive 3 and the sheet material 2.

Figure 7b is a cross-sectional diagram of two interlayers 1, 1' of Figure 7a superimposed upon one another to form a stack 40, whereby the first interlayer 1 and the second interlayer 1' are arranged upon each other so that the exposed pressure-sensitive adhesive stripes 3' of the interlayer 1' are contacting the exposed pressure-sensitive adhesive stripes 3 of interlayer 1.

Figure 8a is a cross-sectional diagram of an interlayer 1 comprising stripes of a double-coated adhesive tape 9 on a first major surface of a sheet material 2 and stripes of an exposed pressure-sensitive adhesive 3 attached to the opposite major surface of the sheet material 2 via stripes of primer 4, said stripes of double-coated adhesive tape 9 and the pressure sensitive adhesive stripes 3 being arranged directly opposite to one another. A liner 6 protects the exposed layer of pressure-sensitive adhesive 3 on the double-coated adhesive tape 9.

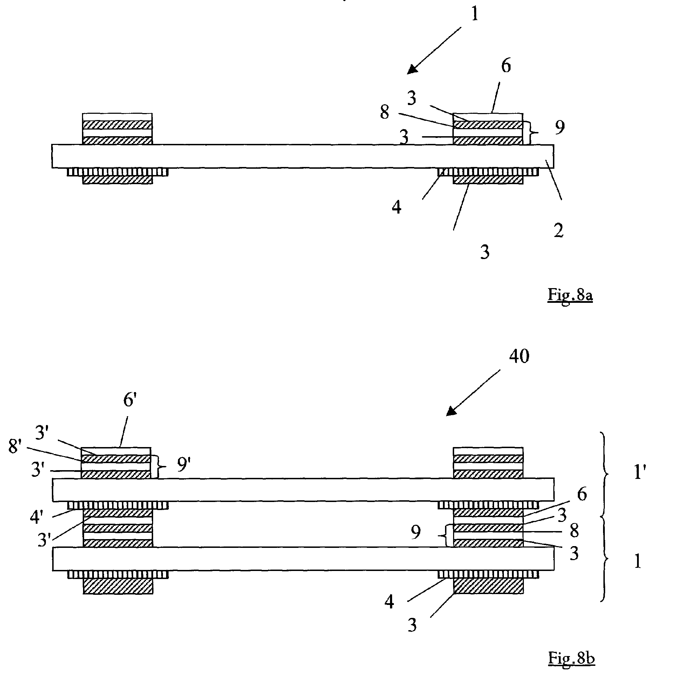

Figure 8b is a cross-sectional diagram of a first interlayer 1 and a second interlayer 1' of Figure 8a superimposed upon one another to form a stack 40, whereby the first interlayer 1 and the second interlayer 1' are arranged upon each other so that liner 6 of the double-coated adhesive tape 9 of interlayer 1 is in contact with the layer of exposed pressure-sensitive adhesive 3' of interlayer 1'.

Test Methods

*Coefficient of friction (COF)*

Coefficient of friction was measured according to Deutsche Industrie Norm (DIN) 53 375-B.

Materials (Surface 1 - representing the sheet material) to be tested were adhered to the surface of a 7.5 cm x 23.5 cm aluminum test plate using a double-coated adhesive tape # 444 from 3M Company, St. Paul, Minnesota/ USA. The backing had the dimensions of 7.5 cm x 14.5 cm and was adhered to the aluminum test plate over its entire area with double-coated adhesive tape.

1) BOPP - Biaxially-oriented polypropylene (BOPP) 36 μm thick, available as WALOTHEN 040E from Wolff Walsrode AG, Walsrode, Germany.

2) LDPE - low density polyethylene, 50 μm, available as PLASTOTRANS™-Quality 16000) from 4P Folie Forchheim GmbH (Forchheim, Germany).

3) PET - Polyethylene terphthalate, 36 μm thick, available as HOSTAPHAN RN 36 from Puetz & Co., Taunusstein-Wehen, Germany.

The frictional forces between two materials were measured by pulling a sled, where the bottom face of the sled comprising a flat surface area of 40 $cm^2$ (6.3 cm on one side) bearing a first material over the second material fixed to the aluminum test plate. The total weight of the sled including 40 $cm^2$ of the test substrate was 200 g.

The materials (Surface 2 - representing the surface of the goods to be stabilized) used on the bottom face of the sled were varied as follows:

1) LDPE - low density polyethylene, 50 μm, available as PLASTOTRANS™-Quality 16000) from 4P Folie Forchheim GmbH (Forchheim, Germany).

**14**

2) Cardboard - available as Mosinee # 696C virgin fiberboard from Mosinee Paper Corporation, Wisconsin/USA.

The static coefficient of friction was calculated from the frictional forces measured according to the following formula:

Static coefficient of friction ($\mu$s)

$$\mu_S = F_S / F_\rho$$

where $F_s$ is the static frictional force and Fp is the normal force (the force acting perpendicular to the surfaces in contact). The normal force employed was 200g in each case.

Measurements were made by mounting the sled into a commercially available tensile tester (available from Zwick GmbH & Co. in Ulm, Germany) and pulling it for a total distance of ca. 7.5 cm at a rate of 100 mm / min across the exposed functional surface to be evaluated. Test data were collected and coefficient of friction results were calculated using the software package testXpert ® Version 04.96 / T-01-00 (Copyright 1996) available from Zwick GmbH & Co in Ulm, Germany.

The test was run five times for each material using five different samples, and the results averaged.

*90° peel adhesion*

90° peel adhesion of two adhesive-bearing interlayers from one another was measured using a tensile tester adapted in a special configuration to allow a peel angle of 90° to be maintained during the test. The equipment configuration is described in FINAT Test Method no. 2, an industry standard 90° peel test method (available from Federation Internationale des Fabricants Europeens et Transformateurs d'Adhesifs et Thermocollants sur Papiers et autres Supports (FINAT)).

A test laminate was prepared by taking a first 2.54 cm wide strip of interlayer bearing a full coating of pressure-sensitive adhesive and mounting it lengthwise on an aluminum test plate (120 mm x 50 mm). The interlayer was adhered to the test plate via the sheet material using a double-coated adhesive tape so that the exposed layer of PSA on the interlayer was facing up. A second 2.54 cm wide strip of interlayer bearing a full coating of PSA was placed on top of the first interlayer in a manner so that the two exposed layers of PSA on the interlayers, respectively, were contacting each other over the full surface. The test laminate thus prepared was placed in a 50° C forced air oven for three days. After removal from the oven, the test laminate was conditioned at 23° C and a relative humidity of 50 % for 24 hours before testing.

The force required for the 90° peeling of the first interlayer from the second interlayer was then measured at a separation rate (jaw speed of the tensile tester) of 300 mm/min. Each exposed layer to be tested was evaluated in three separate tests and the results were averaged. 90° peel adhesion results were recorded in N/cm.

Examples

*Example 1*

A 1000 m long roll of 80 cm wide kraft paper was employed as received. A 20 mm wide, double-coated pressure-sensitive adhesive tape available as Tape # 9415 from 3M Company, St. Paul, MN, was applied along the entire length of the roll of paper described above. The double-coated adhesive tape comprised a film backing bearing an aggressive acrylic pressure-sensitive adhesive (PSA) on one major surface of the backing and a removable acrylic pressure-sensitive adhesive on the other major surface of the backing. The removable acrylic PSA comprised a layer of "microsphere K" as described in US patent 5,266,402. The removable acrylic PSA surface was protected by a release liner. The adhesive tape was adhered to the upper surface and the lower surface of the paper web in the down-web direction using four tape application heads (two on the top and two on the bottom). The tape was applied in a manner so that the aggressive PSA layer was bonded to the paper and the removable PSA was exposed on the surface of the interlayer.

One adhesive tape stripe was adhered parallel and adjacent to each of the two long edges, respectively, of the paper web in the down-web direction, each adhesive tape stripe being located at a distance of 10 cm from the long edges of the paper web. The protective release liner was removed from all four strips and rolled up on four liner take-up reels in concerted fashion with the tape application.

A 110 cm length interlayer was subsequently cut off by a knife which cut the taped adhesive-bearing web in the cross-web direction, perpendicular to the long edges of the paper roll. The knife was located on the device of the invention in the down web direction with relationship to the tape application heads.

The 80 cm x 110 cm separated interlayer was grasped by a robotic device comprising movable arms bearing suction cups and transported to a position above a nearby pallet bearing a single layer of packages comprising LDPE-wrapped bundles of disposable diapers (= pieces of goods). The robotic device applied the interlayer to the upper surface of the layer of packages on the pallet.

A second robotic device designed and employed for loading goods onto pallets then added a second layer of LDPE-wrapped packages on top of the first interlayer.

Additional double-coated pressure-sensitive adhesive tape was applied to the sheet material and then a second interlayer was severed and applied to the second layer of LDPE-wrapped packages by the first robotic device. Application of tape on the sheet material and cutting of the second interlayer was performed while the robot was applying the first interlayer to the stack of goods.

This process was repeated until five layers of LDPE-wrapped bundles were stacked on the pallet. A fifth adhesive-bearing paper interlayer was added on top of the uppermost layer of bundles.

The loaded pallet was then wrapped around the four vertical sides with three wrappings of transparent, stretchable 12 μm polyolefin pallet wrapping film available as WINWRAP™ from G. + L. Heikaus Kunstoffverarbeitung und Verpackungen GmbH (Wiehl-Marienhagen/Germany). The finished pallet was then transported over a distance of 20 km with a truck. The stretchable pallet wrapping film was then removed to allow direct access to the pallet bearing the layers of bundles. The film-wrapped bundles of disposable diapers with interlayers between the layers of bundles remained stable on the pallet as bundles were removed individually over time.

The interlayers could be separated easily from the film-wrapped bundles during the gradual unloading process without tearing the film wrapping or damaging the diaper packaging in any manner.

A summary of the construction and method of preparation of Example 1 is shown in Table 2.

*Example 2*

A 80 cm wide, 1000 m long roll of 60 g kraft paper was primed completely on one side using an anchorage promoting agent (primer) and dried in a forced air oven. A removable acrylate-based pressure-sensitive adhesive, as described as "microsphere K" in US patent 5, 266, 402, was coated on a first major surface of the paper sheet material in 25 mm wide stripes on top of the continuous primer layer at a thickness of ca. 50 μm and dried in a forced air oven to give an adhesive layer thickness of ca. 25 μm.

A layer of release material 5 was applied to the second major surface of the paper sheet material 2 in 30 mm stripes and dried. The release material was placed only in areas directly opposing the adhesive stripes. The release material was present only to facilitate unwind of the continuous roll.

The continuous roll of adhesive-bearing sheet material just described was mounted on the device 10 of the invention so that the adhesive-free side of the paper sheet 2 material faced up. Double-coated adhesive tape # 9415, described in detail in Example 1, was applied in stripes to the second major surface of the paper sheet material. The stripes of # 9415 double-coated tape were placed near but not overlapping with the stripes of release material 5 to allow good anchorage of the double-coated adhesive tape to the paper sheet material. The Tape # 9415 was applied in a manner so that its more aggressive PSA layer was bonded to the paper sheet material 2 and the less aggressive removable PSA was exposed.

A summary of the construction and method of preparation of Example 2 is shown in Table 2.

*Example 3*

A two-layer, biaxially-oriented film sheet material 2 was prepared as described in European patent application EP 1,184,164. The two-layer film comprised a 35 μm layer of polypropylene and 5 μm layer of linear low density polyethylene (LLDPE). The thin layer of LLDPE provided a high coefficient-of-friction on one major surface of the sheet material 2. This two-layer film was employed as sheet material 2 for use with the device 10 of the present invention. The roll of two-layer film was 1000 m long and 80 cm wide. A roll of the two-layer film described above was mounted on the device of the invention so that the polypropylene side was facing up. Two continuous stripes of ethylene-vinyl acetate (EVA) copolymer having 70 % vinyl acetate content, melt flow index of 2-6 (g/10 min at 190°C according to ISO 1133), available as LEVAMELT™ 700 from Bayer AG (Leverkusen, Germany), were applied using an extruder and hot-melt coating head at a thickness of 20 μm. The stripes were applied at a width of 35 mm at a distance of 120 mm from the edge of the web. Interlayers were cut from the roll at a length of 120 cm to make a finished interlayer 80 cm wide and 120 cm long. Interlayer 1 thus prepared were employed in packaging operations directly after cutting from the roll and turning the interlayer so that the LLDPE side of the interlayer was facing up.

A summary of the construction and method of preparation of Example 3 is shown in Table 2.

*Example 4*

A multilayer sheet material 2 was prepared, comprising a two-layer, biaxially-oriented film was prepared as described in European patent application EP 1,184,164. The two-layer film comprised a 32 μm layer of polypropylene and 3 μm layer of linear low density polyethylene (LLDPE). The thin layer of LLDPE provided by co-extrusion provided a high coefficient-of-friction layer on one major surface of the sheet material. The width of the roll of two layer film was 120 cm.

The multilayer film sheet material 2 described above was mounted on the device 10 of the invention so that the polypropylene side was facing down. Four continuous stripes of double-coated tape # 444 (3M Company, St. Paul MN/USA), comprising a polyester film backing 8 bearing a layer of acrylic-based pressure-sensitive adhesive 3 on each major surface of the backing 8 (total thickness 100 μm) were applied to the polypropylene surface of the sheet material 2 using tape application heads. The stripes of # 444 double-coated pressure-sensitive adhesive tape 9 were applied at a tape width of 15 mm, equidistant from each other and from the edge of the web.

A summary of the construction and method of preparation of Example 4 is shown in Table 2.

*Example 5*

A 80 cm wide, 1000 m long roll of biaxially-oriented polypropylene (BOPP) sheet material 2 was primed completely on a first major surface and then coated on top of the primer layer with four stripes of removable acrylate-based pressure-sensitive adhesive as described in "microsphere K" in US patent 5,626,955. The stripes were 20 mm wide and located equidistant from each other and from the edges of the web.

The adhesive-bearing roll of sheet material 2 thus prepared was placed on the device so that the un-coated BOPP side was facing up. Two stripes of double-coated adhesive tape # 444 (3M Company), comprising a polyester film backing bearing acrylic pressure-sensitive adhesive on both major surfaces of the backing (total thickness 100 μm), were applied to the uppermost major surface of the BOPP sheet material 2. The two stripes were 12 mm wide and were placed at a distance of 50 mm from the edge of the web. The exposed layers of PSA on each of the major surface (four stripes on the first major surface and two stripes on the second major surface) of the sheet material 2 were arranged in a staggered configuration. A liner protecting one side of the double-coated adhesive tape was removed and wound up on liner take-up rolls during the in-line process. Interlayers 1 were cut from the roll with a knife and subsequently placed between layers of goods 30 as they were loaded on pallets. A summary of the construction and method of preparation of Example 5 is shown in Table 2.

*Example 6*

A 1000 m long, 75 cm wide roll of biaxially-oriented polypropylene film (BOPP) having a thickness of 35 μm was employed as a sheet material 2 as received. The sheet material 2 was used with the device 10 of the invention. A hot melt adhesive comprising an ethylene-vinyl acetate polymer having a vinyl acetate content of 70 % (available as LEVAMELT ™ 700 from Bayer AG) was applied to one major surface of the BOPP sheet material 2 using a hot-melt adhesive application system comprising an adhesive spraying head, available as Series 3000 V PC from Nordson Deutschland Gmbh, Erkrath/Germany). The exposed layer of pressure-sensitive adhesive 3 generated by this method was not a continuous layer with a uniform thickness, but rather a mass of randomly laid down pressures-sensitive adhesive filaments sprayed onto the sheet material 2 in molten form.

The interlayers 1 comprising a BOPP film sheet material 2 with an exposed layer of PSA partially coated on only one major surface of the sheet material 2 were separated from the roll with a knife and placed on a layer of goods 30 so that the adhesive-bearing side of the interlayer 1 faced down. Application in this fashion caused the interlayer 1 to remain adhered to the lower of two layers of goods 30 when the pallet was unloaded.

Coefficient-of-friction experiments were performed using the method described above under Test Methods to show that interlayers 1 comprising one major surface of untreated BOPP have a particularly advantageous coefficient-of-friction against low density polyethylene (LDPE), a polymeric film commonly used for wrapping hygiene products like bundles of disposable diapers.

A summary of the construction and method of preparation of Example 6 is shown in Table 2.

BOPP was compared with LDPE and polyethylene terepthalate (PET) films for ability to prevent slipping against LDPE films and cardboards used as packaging materials for goods. Results of coefficient-of-friction measurements simulating the interlayer sheet 1 material against these two common packaging materials for goods 31 are shown in Table 1.

Table 1

| Surface 1 (simulating the exposed sheet material 2 of interlayer 1 comprising the pressure-sensitive adhesive 3) | Surface 2 (simulating the packaging material of the goods 31 to be stabilized) | Coefficient of friction (200 g), DIN 53 375-B |
|---|---|---|
| BOPP | LDPE | 0.97 |
| BOPP | Cardboard | 0.44 |
| PET | LDPE | 0.24 |
| PET | Cardboard | 0.18 |
| LDPE | LDPE | 0.47 |
| LDPE | Cardboard | 0.26 |

*Example 7*

A roll (1000 m long and 80 cm wide) of 60g kraft paper was cut into lengths of 110 cm and stacked to provide a non-continuous sheet material 2. The stack of paper sheet material 2 was then employed with the device 10 of the invention. Four adhesive tape application heads were used to apply pressure-sensitive adhesive 3 on both the upper major surface and the lower major surface of each piece of sheet material 2. A double-coated pressure-sensitive adhesive tape # 9415 (3M Company), described in detail in Example 1, was applied as two stripes on the upper major surface and two stripes on the lower major surface of the sheet material 2. The double-coated adhesive tape 9 comprised a film backing 8 bearing an aggressive acrylic pressure-sensitive adhesive (PSA) 3 on one major surface of the backing and a removable acrylic pressure-sensitive adhesive 3 on the second major surface of the backing 8. The removable acrylic PSA was protected by a liner. Each stripe of adhesive tape had a width of 25 mm and was applied parallel to the edge of the sheet at a distance of 8 cm from the edge of the sheet. The two tape stripes were directly opposing one another on opposite major surfaces of the sheet material 2. The finished interlayers 1 were applied directly to layers of goods 30 on a pallet without a cutting step. A summary of the construction and method of preparation of Example 7 is shown in Table 2.

*Example 8*

Biaxially-oriented polypropylene (BOPP) film (40 μm) was air-corona treated on both major surfaces to provide a sheet material 2. The process for applying adhesive tape to both major surface of the sheet material 2 in the present Example 8 was carried out in a manner similar to that described in Example 1. A different double-coated adhesive tape was employed, however. Four stripes of double-coated adhesive tape # 665 Linerless Double-coated Adhesive Tape with acetate film carrier (0.09 mm thick), available from 3M Company, St. Paul, MN/USA, were applied to the upper major surface of the BOPP sheet material 2 and four stripes were applied to the lower major surface of the BOPP sheet material 2 at the same time using tape application heads. Tape # 665 comprised a cellulose acetate backing bearing two differing layers of acrylic pressure-sensitive adhesive 3 on each major surface of the tape backing 8, respectively. The higher adhesion surface of the double-coated adhesive tape 9 was adhered to the first major surface of the BOPP sheet material 2 and the lower adhesion surface of the double-coated adhesive tape 9 was adhered to the second major surface of the BOPP sheet material 2.
The tape stripes were 12 mm wide and the outermost stripes were applied 5 cm from the edge of the web. The four stripes on one major surface of the sheet material 2 were directly opposing the four stripes on the second major surface of the sheet material 2. Tape # 665 comprised no release liner in the tape roll so no liner take-up rolls were necessary as in Example 1.
The material prepared in this manner was cut with a knife in an in-line fashion. Single interlayers 1 were applied as prepared to layers of goods 30 on nearby pallets using a robotic device.

*Example 9*

Biaxially-oriented polypropylene (BOPP) film (40 μm) was air-corona treated on one major surface to provide a sheet material 2. Double-coated adhesive tape # 9415 from 3M Company, St. Paul, MN, described in detail in Example 1, was applied (to the corona-treated surface) along the entire length of a 80 cm wide roll of BOPP sheet material 2 having a length of 1000 m. The double-coated adhesive tape 9 comprised a film backing 8 bearing an aggressive acrylic pressure-sensitive adhesive (PSA) 3 on one major surface of the backing 8 and a removable acrylic pressure-sensitive adhesive 3 on the second major surface of the tape backing 8. The removable acrylic PSA layer 3 of the double-coated tape 9 was protected by a liner. The double-coated adhesive tape 9 was adhered to the upper corona-treated surface of the BOPP sheet material 2 in the down-web direction using two tape application heads by means of the more aggressive PSA layer of the double-coated adhesive tape 9.

The material thus prepared was cut with a knife and applied as an interlayer 1 to a layer of film-wrapped (LDPE) goods on a pallet. The interlayer 1 was placed so that the exposed layer of pressure-sensitive adhesive 3 faced down and the adhesive-free surface of the BOPP sheet material 2 faced up. The BOPP film sheet material 2 was also found to have a high coefficient-of-friction against LDPE film as demonstrated previously in Example 6 and summarized in the related Table 1.

Table 2

| Ex. | Sheet material 2 | Exposed material on first major surface | Method for applying layer of exposed material on first major surface | Exposed layer of PSA on second major surface | Method of applying layer of PSA on second major surface | PSA configuration (when PSA present on both major surfaces) |
|---|---|---|---|---|---|---|
| 1 | Paper (roll) | RPSA | DC tape 9415 | RPSA | DC tape 9415 | Opposing |
| 2 | Paper | Release material | Coating from water | RPSA | Coating from water | -- |
| 3 | BOPP | LLDPE | Coextr. with BOPP | EVA | Hot-melt coating | -- |
| 4 | BOPP | LLDPE | Coextr. with BOPP | acrylic | DC tape # 444 | -- |
| 5 | BOPP | RPSA | Coating from water | acrylic | DC tape # 444 | Staggered |
| 6 | BOPP | -- | -- | EVA | Hot-melt coating | -- |
| 7 | Paper (stack) | RPSA | DC tape # 9415 | MS PSA | DC tape # 9415 | Opposing |
| 8 | BOPP | Side 1 of # 665 | DC tape # 665 | Side 2 of # 665 | DC tape # 665 | Opposing |
| 9 | BOPP | -- | -- | RPSA | DC tape # 9415 | -- |
| RPSA = Removable acrylate-based pressure-sensitive adhesive | | | | | | |

*Example 10*

An interlayer 1 was prepared as described above in Example 1. Ten of such interlayers were superimposed directly on top of one another to form a stack 40. Pressure-sensitive adhesive layers from a first interlayer 1 were in direct contact with pressure-sensitive adhesive layers from an adjacent interlayer 1' in the stack 40. The stack 40 was stored at 50° C for 3 days and then one interlayer was removed from the stack 40 in a qualitative test. The interlayer 1 could be removed easily with no adhesive transfer and no damage.

90° peel values were also measured quantitatively using two interlayers 1, 1' where the adhesive-bearing portions (2.54 cm wide) had been laminated together and stored under various conditions. After twenty minutes at 23° C, a 90° peel value of 0.35 N/cm was measured. After three days at 23° C, the 90° peel force had risen to 0.98 N/cm. After three days at 50° C, the interlayers 1,1' were still cleanly separable from one another with a force of 1.10 N/cm. These results indicate that the interlayers of such stacks would be cleanly separable from each other after longer storage periods at ambient temperatures. Test results are summarized in Table 3.

Table 3

| Aging conditions | | 90° peel adhesion (N/cm) |
|---|---|---|
| Time | Temperature | |
| 20 min | 23° C | 0.35 |

Table 3   (continued)

| Aging conditions | | 90° peel adhesion (N/cm) |
|---|---|---|
| Time | Temperature | |
| 3 days | 23° C | 0.98 |
| 3 days | 50° C | 1.10 |

*Example 11*

An interlayer 1 was prepared as described above in Example 8. Ten interlayers of Example 8 were superimposed directly on top of one another to form a stack 40. Pressure-sensitive adhesive layers from one interlayer 1 were in direct contact with pressure-sensitive adhesive layers from an adjacent interlayer 1' in the stack 40.

The stack 40 was stored at 23° C for seven days and then an interlayer 1 was separated from the stack 40 in a qualitative test. The interlayer 1 could be removed easily with no adhesive transfer and no damage.

Quantitative 90° peel values were also measured using two interlayers 1,1' where the adhesive bearing portions (2.54 cm wide) had been laminated together and stored under various conditions. After twenty minutes at 23° C, a peel value of 2.8 N/cm was measured. After three days at 23° C, the 90° peel force had risen to 5.0 N/cm. After three days at 50° C, the interlayers were still cleanly separable from one another with a force of 6.1 N/cm. These results indicate that the interlayers in such stacks would be cleanly separable from the stack after longer storage periods at ambient temperatures. Test results are summarized in Table 4.

Table 4

| Aging conditions | | 90° peel adhesion (N/cm) |
|---|---|---|
| Time | Temperature | |
| 20 min | 23° C | 2.8 |
| 3 days | 23° C | 5.0 |
| 3 days | 50° C | 6.1 |

*Example 12*

An interlayer 1 was prepared as described above in Example 4. Ten of the interlavers of Example 4 were superimposed directly on top of one another to form a stack 40. The stack 40 was stored at 23° C for seven days and then a first interlayer 1 were separated from the stack 40 in a qualitative test. The exposed layer of acrylic pressure-sensitive adhesive of a first interlayer 1 separated cleanly from the LLDPE surface on the sheet material 2' of a second interlayer 1'. The two interlayers 1, 1' separated with low peel force and with no adhesive transfer and no damage.

*Example 13*

An interlayer 1 was prepared as described above in Example 9. Ten of the interlayers 1 of Example 9 were superimposed directly on top of one another to form a stack 40. The stack 40 of ten interlayers was stored at 23° C for seven days and then the two interlayers 1,1' were separated in a qualitative test. The exposed layer of removable acrylic PSA 3 on a first interlayer 1 separated cleanly from the BOPP sheet material 2' of a second interlayer 1'. The interlayers 1, 1' came apart easily with no adhesive transfer and no damage.

90° peel values were also measured using two interlayers where the adhesive bearing portion (2.54 cm wide) of a first interlayer 1 had been laminated together with an untreated film comprising untreated biaxially-oriented polypropylene (BOPP) on a second interlayer 1' and stored under various conditions. After twenty minutes at 23° C, a 90° peel value of 0.94 N/cm was measured. After three days at 23° C, the 90° peel force was 0.83 N/cm. After three days at 50° C, the adhesive-bearing interlayers 1,1' were still cleanly separable from one another at a 90° peel angle with a force of 1.02 N/cm. Test results are summarized in Table 5.

These results indicate an especially low level of adhesion build-up over time. This suggests that adjacent interlayers 1,1' would be cleanly separable with low peel force after longer storage periods at ambient temperatures.

Table 5

| Aging conditions | | 90° peel adhesion (N/cm) |
|---|---|---|
| Time | Temperature | |
| 20 min | 23° C | 0.94 |
| 3 days | 23° C | 0.83 |
| 3 days | 50° C | 1.02 |

Table 6

| Example | Interlayers 1, 1' used in stack 40 | Two opposing surfaces of interlayers 1,1' | |
|---|---|---|---|
| | | from interlayer 1 | from interlayer 1' |
| 10 | Example 1 | RPSA from DC Tape # 9415 | RPSA from DC Tape # 9415 |
| 11 | Example 8 | DC Tape # 665 (side 1 ) | DC Tape # 665 (side 2) |
| 12 | Example 4 | LLDPE | Acrylate PSA from DC Tape # 444 |
| 13 | Example 9 | BOPP | RPSA from DC Tape # 9415 |

Key to the Figures

1 Interlayer
2 Sheet material
3 Pressure-sensitive Adhesive layer
4 Primer
5 Release material
6 Liner
7 Layer of polymer having a high coefficient-of-friction
8 Backing of double-coated tape
9 Double-coated tape
10 Device
13 Adhesive tape dispensing roll
14 Adhesive tape
15 Adhesive tape application head
16 Liner take-up roll
17 Liner
18 Knife
19 Drive mechanism
20 Means for applying interlayer to layer of goods
21 Interlayer edge gripper
22 Linear drive arm for interlayer edge gripper
23 Interlayer holder
24 Suction cup
25 Means for stacking goods on a pallet
26 Conveyor belt
27 Adjustable pallet support
30 Layer of goods
31 Individual member of a layer of goods
32 Pallet
40 Stack of superimposed interlayers

**Claims**

1. A semi-continuous method for stacking layers of goods on a supporting substrate comprising the steps of:

   a) providing a continuous or discontinuous sheet material (2) having first and second major surfaces,
   b) optionally applying an exposed layer of pressure-sensitive adhesive (3) to at least partially cover at least one of said major surfaces of said sheet material (2), and optionally cutting said continuous sheet material (2), to provide an interlayer (1),
   c) providing a first layer of goods (30) on a supporting substrate, said layer of goods having an upper and lower surface,
   d) applying said interlayer (1) to the upper surface of the first layer of goods and
   e) stacking a second layer of goods (30') on top of the interlayer (1),

   with the proviso that if no exposed layer of pressure-sensitive adhesive (3) is provided in step b), the continuous or discontinuous sheet material (2) comprises an exposed layer of pressure-sensitive adhesive (3) at least partially covering one major surface.

2. Method of claim 1, wherein one major surface of the sheet material (2) provided in a) comprises an exposed layer of pressure-sensitive adhesive (3) at least partially covering one major surface.

3. Method of any of the claims 1-2, where the exposed layer of pressure-sensitive adhesive (3) is provided in step b) by applying a single layer of pressure-sensitive adhesive to the sheet material (2).

4. Method of claim 3 where the exposed layer of pressure-sensitive adhesive (3) provided in b) is applied to at least partially cover at least one major surface of the sheet material (2) by adhering a self-supporting pressure-sensitive adhesive layer.

5. Method of claim 3 where the exposed layer of pressure-sensitive adhesive (3) provided in b) is applied to at least partially cover at least one major surface of the sheet material (2) by hot-melt coating.

6. Method of any of the claims 1-2, where the exposed layer of pressure-sensitive adhesive (3) provided in step b) is applied by adhering a double-coated adhesive tape (9) to at least partially cover at least one major surface of the sheet material (2), where said double-coated adhesive tape (9) comprises a backing (8) having two major surfaces and an exposed layer of pressure-sensitive adhesive (3) on at least one of said major surfaces of said backing (8), and where said adhesive tape (9) is applied to the sheet material (2) in such a manner that the layer of pressure-sensitive adhesive is exposed.

7. Method of any of the claims 1-6, where the exposed layer of pressure-sensitive adhesive (3) covers between 1 % and 95 % of the major surfaces) of the sheet material (2) to which it has been applied.

8. Method of any of the claims 1-6, where the exposed layer of pressure-sensitive adhesive (3) covers between 5 and 30 % of the major surfaces) of the sheet material (2) to which it has been applied.

9. Method of any of the claims 1-8, where an exposed layer of pressure-sensitive adhesive (3) at least partially covers both major surfaces of the sheet material (2), in a configuration such that, if a first interlayer (1) is superimposed upon a second interlayer (1'), the exposed layer of pressure-sensitive adhesive (3) on the first major surface of the first interlayer (1) does not contact an exposed layer of pressure-sensitive adhesive (3') on the second major surface of the second interlayer (1').

10. Method of any of the claims 1-8, where an exposed layer of pressure-sensitive adhesive (3) at least partially covers both major surfaces of the sheet material (2), in a configuration such that, if a first interlayer (1) is superimposed upon a second interlayer (1'), the exposed layer of pressure-sensitive adhesive (3) on the first major surface of the first interlayer (1) at least partially contacts an exposed layer of pressure-sensitive adhesive (3') on the second major surface of the second interlayer (1').

11. Packaging device (10) suitable for preparing stabilized stacks of goods on a supporting substrate according to the method of claims 1-11 comprising:

a) a supply of continuous or discontinuous sheet material (2) having first and second major surfaces,

b) means for applying an exposed layer of pressure-sensitive adhesive (3) to at least partially cover at least one of said major surfaces of the sheet material (2), and optional means for cutting said continuous sheet material (2), said means allowing to form an interlayer (1),

c) means (20) for applying said interlayer (1) to the upper surface of a layer of goods (30) on a supporting substrate and

d) optional means (25) for automatically stacking of a second layer of goods (30') on top of the interlayer (1).

12. Device of claim 11, where the means for appyling said exposed layer of pressure-sensitive adhesive (3) comprises at least one adhesive tape application head (15).

13. Device of claim 11, where the means for appyling said exposed layer of pressure-sensitive adhesive (3) comprises at least one hot-melt adhesive coating device.

14. Device of any of the claims 11-13, where the means (20) for applying said interlayer (1) to said layers of goods (30) comprises a robotic component for grasping an interlayer (1) and applying said interlayer to the upper surface of a layer of goods (30) on a supporting substrate and subsequently releasing said interlayer (1).

15. An interlayer (1) for stabilizing layers of goods on a supporting substrate, comprising a sheet material (2) having two major surfaces and an exposed layer of pressure-sensitive adhesive (3) at least partially covering both of the major surfaces of the sheet material (2) in a configuration such that if a first interlayer (1) is superimposed on a second interlayer (1'), the exposed layer of pressure-sensitive adhesive (3) on the first major surface of the first interlayer (1) at least partly overlaps with an exposed layer of pressure-sensitive (3') on the second major surface of the second (1').

16. An interlayer (1) of claim 15 where the exposed layer of pressure-sensitive (3) comprises an acrylate-based pressure-sensitive adhesive selected such that a first interlayer (1) and a second interlayer (1') are capable of being superimposed and then separated without damage to each other and without intervention of a protective release liner, where the 90° peel adhesion of the first Interlayer (1) from the second interlayer (1') after 3 days at 50° C is less than 7.0 N/cm.

17. An interlayer (1) for stabilizing layers of goods on a supporting substrate, comprising a sheet material (2) having two major surfaces and exposed layers of pressure-sensitive adhesive (3) at least partially covering both of the major surfaces of the sheet material (2) in a staggered configuration whereby at least one major interface of the sheet material (2) bears an exposed release material directly opposing the exposed layer of pressure-sensitive adhesive on the other major surface of the sheet material

18. An interlayer (1) for stabilizing layers of goods on a supporting substrate, comprising a sheet material (2) having two major surfaces and an exposed layer of pressure-sensitive adhesive (3) at least partially covering a first major surface of the sheet material (2), where the second major surface of the sheet material (2) comprises an exposed layer of polymer having a Vicat softening point of less than 65° C as measured according to EN ISO 306:1994(E) at least partially covering the second major surface.

19. Interlayer (1) comprising a sheet material (2) having two major surfaces, comprising an exposed layer of pressure-sensitive adhesive (3) at least partially covering the first major surface and an exposed polymeric layer having a coefficient of friction against LDPE of at least 0.4 as measured by DIN 53 375B at least partially covering the second major surface.

20. Interlayer (1) of claim 19, whereby the exposed polymeric layer of the sheet material (2) is biaxially-oriented polypropylene.

21. An interlayer (1) of any of the claims 15-20, where the exposed layer of pressure-sensitive adhesive (3) covers between 5 and 30 % of each of the major surface(s) of the sheet material (2) to which it has been applied.

22. Interlayer (1) of any of the claims 15-21, where the sheet material (2) comprises paper.

23. Interlayer (1) of any of the claims 15-21, where the sheet material (2) comprises a polymeric film.

24. Interlayer (1) of any of the claims 15-23, where the exposed layer of pressure-sensitive adhesive (3) comprises an acrylate-based pressure-sensitive adhesive.

25. Interlayer (1) of any of the claims 15-23, where the exposed layer of pressure-sensitive adhesive (3) comprises a removable acrylate-based pressure-sensitive adhesive comprising tacky elastomeric microspheres.

26. Interlayer (1) comprising a sheet material (2) having first and second major surfaces, where at least one major surface of the sheet material (2) is at least partially covered by an exposed layer of pressure-sensitive adhesive (3), and where the sheet material (2) comprises paper and where the pressure-sensitive adhesive layer (3) is selected such that, if a first interlayer (1) is superimposed upon a second interlayer (1'), separation of the interlayers (1, 1') would result in damage to the sheet material (2) or deposit of adhesive residue on the sheet material (2).

27. A stack (40) of interlayers, comprising at least a first interlayer (1) superimposed upon a second interlayer (1'), where each of the interlayers (1, 1') comprises a sheet material (2) having a first and a second major surface, and where the major surfaces of each interlayer (1,1') each bear an exposed layer of pressure-sensitive adhesive (3) in a configuration such that the exposed pressure-sensitive adhesive layer on the upper major surface of interlayer 1' at least partly overlaps with the exposed pressure-sensitive adhesive layer on the lower major surface of interlayer 1 and where the exposed layer of pressure-sensitive adhesive (3) comprises tacky elastomeric microspheres.

28. Use of any of an interlayer (1) of any of the claims 15-26 for stabilizing layers of goods (30) stacked on a supporting substrate.

Fig.1a

Fig.1b

Fig.1c

Fig.2a

Fig.2b

Fig.2c

Fig. 3a

30'

31'

30

1

3

31

32

2

Fig.3b

Fig.3c

Fig.4a

Fig.4b

Fig.5a

Fig.5b

1

5

4

3    2

Fig:6a

1'

5

2

4

3

5'

4'

3'

Fig:6b

1

3

4

2

4

3

Fig.7a

40

3'

4'

2'

1'

4'

3'

3

4

2

1

4

3

Fig.7b

Fig.8a

Fig.8b

**European Patent Office**

**EUROPEAN SEARCH REPORT**

Application Number

EP 02 01 7220

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 339 957 A (CARSTENS RONALD) 23 August 1994 (1994-08-23) | 1-4,7,8, 10,15, 19,22, 27,28 | B65G57/00 B65D71/00 |
| Y | * column 3, line 59 - column 5, line 5; figures 1-3 * | 11,14, 21, 23-25,27 | |
| Y | WO 99 01345 A (TETRA LAVAL HOLDINGS & FINANCE ;OHLSSON PER ERIK GUSTAV (GB); MCGE) 14 January 1999 (1999-01-14) * figure 1 * | 11,14 | |
| Y | EP 0 283 405 A (ATCOLL APPLIC TECH COLLAGE) 21 September 1988 (1988-09-21) | 21 | |
| A | * figures 1,2 * | 16,17,26 | |
| Y | EP 1 184 164 A (3M INNOVATIVE PROPERTIES CO) 6 March 2002 (2002-03-06) | 23 | |
| A | * paragraph [0018] * | 18 | |
| Y | US 4 988 567 A (DELGADO JOAQUIN) 29 January 1991 (1991-01-29) | 24,25,27 | TECHNICAL FIELDS SEARCHED (Int.Cl.7) B65G B65D |
| A | * abstract * * column 10, line 60 - line 61 * | 16 | |
| A | US 5 747 131 A (KRECKEL KARL W) 5 May 1998 (1998-05-05) * column 10, line 47 - line 49 * | 17 | |
| A | EP 0 096 536 A (MEAD CORP) 21 December 1983 (1983-12-21) * the whole document * | 1,11,15 | |
| A | GB 2 037 695 A (CHAPMAN LTD H W) 16 July 1980 (1980-07-16) * the whole document * | 1,11,15 | |

-/--

The present search report has been drawn up for all claims

| Place of search | Date of completion of the search | Examiner |
|---|---|---|
| MUNICH | 12 December 2002 | Lawder, M |

**European Patent Office**

**EUROPEAN SEARCH REPORT**

Application Number

EP 02 01 7220

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 472 923 A (NIPPON PETROCHEMICALS CO LTD) 4 March 1992 (1992-03-04) * the whole document * ----- | 1,11,15 | |

TECHNICAL FIELDS SEARCHED (Int.Cl.7)

The present search report has been drawn up for all claims

| Place of search | Date of completion of the search | Examiner |
|---|---|---|
| MUNICH | 12 December 2002 | Lawder, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 01 7220

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2002

| Patent document cited in search report | | Publication date | Patent family member(s) | | Publication date |
|---|---|---|---|---|---|
| US 5339957 | A | 23-08-1994 | NONE | | |
| WO 9901345 | A | 14-01-1999 | AU | 7927198 A | 25-01-1999 |
| | | | WO | 9901345 A1 | 14-01-1999 |
| | | | GB | 2330346 A ,B | 21-04-1999 |
| | | | SE | 514178 C2 | 15-01-2001 |
| | | | SE | 9900675 A | 25-02-1999 |
| EP 0283405 | A | 21-09-1988 | FR | 2611588 A1 | 09-09-1988 |
| | | | DE | 3864708 D1 | 17-10-1991 |
| | | | EP | 0283405 A1 | 21-09-1988 |
| EP 1184164 | A | 06-03-2002 | EP | 1184164 A1 | 06-03-2002 |
| | | | AU | 8847301 A | 22-03-2002 |
| | | | EP | 1184437 A2 | 06-03-2002 |
| | | | WO | 0220265 A1 | 14-03-2002 |
| US 4988567 | A | 29-01-1991 | US | 4968562 A | 06-11-1990 |
| | | | AU | 628706 B2 | 17-09-1992 |
| | | | AU | 6928391 A | 29-08-1991 |
| | | | BR | 9100129 A | 22-10-1991 |
| | | | CA | 2032766 A1 | 28-08-1991 |
| | | | DE | 69026927 D1 | 13-06-1996 |
| | | | DE | 69026927 T2 | 28-11-1996 |
| | | | DK | 444354 T3 | 23-09-1996 |
| | | | EP | 0444354 A2 | 04-09-1991 |
| | | | ES | 2086385 T3 | 01-07-1996 |
| | | | JP | 3317977 B2 | 26-08-2002 |
| | | | JP | 4216888 A | 06-08-1992 |
| US 5747131 | A | 05-05-1998 | DE | 4301165 A1 | 21-07-1994 |
| | | | CA | 2152909 A1 | 04-08-1994 |
| | | | DE | 69319142 D1 | 16-07-1998 |
| | | | DE | 69319142 T2 | 11-02-1999 |
| | | | EP | 0680440 A1 | 08-11-1995 |
| | | | JP | 8505593 T | 18-06-1996 |
| | | | WO | 9416950 A1 | 04-08-1994 |
| EP 0096536 | A | 21-12-1983 | EP | 0096536 A2 | 21-12-1983 |
| GB 2037695 | A | 16-07-1980 | NONE | | |
| EP 0472923 | A | 04-03-1992 | AU | 651604 B2 | 28-07-1994 |
| | | | AU | 8131091 A | 30-01-1992 |
| | | | EP | 0472923 A2 | 04-03-1992 |
| | | | JP | 3172548 B2 | 04-06-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 02 01 7220

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2002

| Patent document cited in search report | Publication date | Patent family member(s) | | Publication date |
|---|---|---|---|---|
| EP 0472923 A | | JP | 5016962 A | 26-01-1993 |
| | | KR | 210267 B1 | 15-07-1999 |
| | | US | 5401563 A | 28-03-1995 |

EPO FORM P0459

For more details about this annex : see Official Journal of the European Patent Office, No. 12/82